(19) 

Europäisches
Patentamt
European
Patent Office
Office européen
des brevets

(11) **EP 4 654 647 A1**

(12) **EUROPEAN PATENT APPLICATION**
published in accordance with Art. 153(4) EPC

(43) Date of publication:
26.11.2025  Bulletin 2025/48

(21) Application number: 23916727.3

(22) Date of filing: 18.01.2023

(51) International Patent Classification (IPC):
*H04W 24/02* (2009.01)

(52) Cooperative Patent Classification (CPC):
H04W 24/02

(86) International application number:
PCT/CN2023/072878

(87) International publication number:
WO 2024/152240 (25.07.2024 Gazette 2024/30)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: **GUANGDONG OPPO MOBILE
TELECOMMUNICATIONS
CORP., LTD.
Dongguan, Guangdong 523860 (CN)**

(72) Inventors:
• **WANG, Shukun
Dongguan, Guangdong 523860 (CN)**
• **XU, Jing
Dongguan, Guangdong 523860 (CN)**
• **SHI, Cong
Dongguan, Guangdong 523860 (CN)**

(74) Representative: **Taor, Simon Edward William et al
Venner Shipley LLP
200 Aldersgate
London EC1A 4HD (GB)**

(54) **COMMUNICATION METHODS, APPARATUS, TERMINAL DEVICE, AND NETWORK DEVICE**

(57)    Provided in the embodiments of the present application are communication methods, an apparatus, a terminal device, and a network device. A method comprises: a terminal device receives first configuration information sent by a network device, the first configuration information being used for configuring an uplink sub-band and/or a downlink sub-band for a TDD cell, the uplink sub-band being at least used for RACH transmission, and the downlink sub-band being at least used for transmission of a downlink common signal and/or common information.

The network device sends first configuration information to the terminal device, and the terminal device receives the first configuration information sent by the network device. The first configuration information is used for configuring an UL subband and/or a DL subband for a TDD cell. The UL subband is used at least for transmission of a RACH, and the DL subband is used at least for transmission of a DL common signal and/or DL common information

401

**FIG. 4**

EP 4 654 647 A1

**Description**

TECHNICAL FIELD

The embodiments of the present disclosure relate to the technical field of mobile communication, and in particular, to a communication method and device, a terminal device, and a network device.

BACKGROUND

In a Time Division Duplexing (TDD) system, uplink (UL) and downlink (DL) slots are allocated in the same frequency band for communication. The terminal device and the network device send and receive on the same frequency band in a TDD manner in a TDD cell, that is, the terminal device performs DL reception and UL sending in the same frequency band, and the network device performs DL sending and UL reception in the same frequency band.

The future communication system mainly relies on high-frequency spectrum, and the TDD manner is more suitable for the communication system. In order to meet the service requirements, communication in some TDD cells is mainly composed of DL communication, and communication in some TDD cells are mainly composed of UL communication. Therefore, TDD cells need to be re-modeled to adapt to new service requirements.

SUMMARY

The embodiments of the present disclosure provide a communication method and device, a terminal device, a network device, a chip, a computer readable storage medium, a computer program product, and a computer program.

A communication method according to the embodiments of the present disclosure includes the following operation.

A terminal device receives first configuration information sent by a network device. The first configuration information is used for configuring an UL subband and/or a DL subband for a TDD cell. The UL subband is used at least for transmission of a Random Access Channel (RACH), and the DL subband is used at least for transmission of a DL common signal and/or DL common information.

A communication method according to the embodiments of the present disclosure includes the following operation.

A terminal device receives first configuration information sent by a network device. The first configuration information is used for configuring multiple initial UL Band Width Parts (BWPs) and/or multiple first DL bandwidths, and the first DL bandwidths are a CSS#0 bandwidth and/or an initial DL BWP. Different initial UL BWPs are configured with independent UL-DL configurations and/or RACH Occasion (RO) resources, and different first DL bandwidths are configured with independent UL-DL configurations and/or Search Spaces (SSs).

A communication method according to the embodiments of the present disclosure includes the following operations.

A network device sends first configuration information to a terminal device. The first configuration information is used for configuring an UL subband and/or a DL subband for a TDD cell. The UL subband is used at least for transmission of a RACH, and the DL subband is used at least for transmission of a DL common signal and/or DL common information.

A communication method according to the embodiments of the present disclosure includes the following operation.

A network device sends first configuration information to a terminal device. The first configuration information is used for configuring multiple initial UL BWPs and/or multiple first DL bandwidths, and the first DL bandwidths are a CSS#0 bandwidth and/or an initial DL BWP. Different initial UL BWPs are configured with independent UL-DL configurations and/or RO resources, and different first DL bandwidths are configured with independent UL-DL configurations and/or SSs.

The terminal device according to the embodiments of the present disclosure includes a processor and a memory. The memory is configured to store a computer program, and the processor is configured to invoke and execute the computer program stored in the memory to perform the communication method described above.

The network device according to the embodiments of the present disclosure includes a processor and a memory. The memory is configured to store a computer program, and the processor is configured to invoke and execute the computer program stored in the memory to perform the communication method described above.

The chip according to the embodiments of the present disclosure is configured to implement the communication method described above.

Specifically, the chip includes a processor. The processor is configured to invoke and execute a computer program from a memory to enable a device on which the chip is mounted to perform the communication method described above.

The computer readable storage medium according to the embodiments of the present disclosure is used for storing a computer program that causes a computer to execute the communication method described above.

The computer program product according to the embodiments of the present disclosure includes computer program instructions that cause a computer to execute the communication method described above.

The computer program according to the embodiments of the present disclosure causes a computer to execute the communication method described above when it is executed on the computer.

In the technical solutions of the embodiments of the present disclosure, an UL subband and/or a DL subband are configured for a TDD cell. The UL subband is used at least for transmission of a RACH, and the DL subband is used at least for transmission of a DL common signal and/or DL common information. According to the above technical solutions, a TDD cell which supports cell level Subband Full Duplex (SBFD) is defined. On the one hand, the UL subband can increase the RACH capacity and reduce the RACH delay, and on the other hand, the DL subband can increase the capacity of the DL common signal and/or DL common information, and reduce the delay of the DL common signal and/or DL common information. Therefore, the TDD cell has more flexibility in high-frequency deployment.

BRIEF DESCRIPTION OF THE DRAWINGS

The accompanying drawings described herein are intended to provide a further understanding of the present disclosure, and constitute a part of the present disclosure. The schematic embodiments of the present disclosure and the description thereof are intended to explain the present disclosure, and do not constitute an undue limitation of the present disclosure.

FIG. 1 is a schematic diagram of an application scenario according to an embodiment of the present disclosure.
FIG. 2 is a schematic diagram of a TDD frame format.
FIG. 3 is a schematic diagram of configuring UL subbands and DL subbands based on a TDD pattern.
FIG. 4 is the first schematic flowchart of a communication method according to an embodiment of the present disclosure.
FIG. 5 is the second schematic flowchart of a communication method according to an embodiment of the present disclosure.
FIG. 6 is a schematic diagram of a long sequence format.
FIG. 7 is a schematic diagram of a short sequence format.
FIG. 8 is a schematic diagram of an UL subband according to an embodiment of the present disclosure.
FIG. 9 is a schematic diagram of RO resources according to an embodiment of the present disclosure.
FIG. 10 is a schematic diagram of PDCCH Occasion (PO) resources according to an embodiment of the present disclosure.
FIG. 11 is a schematic diagram of overlapping of time domain positions according to an embodiment of the present disclosure.
FIG. 12 is a schematic diagram of a UE-to-UE Cross-Link Interference (CLI) according to an embodiment of the present disclosure.
FIG. 13 is a schematic diagram of a gNB-to-gNB CLI according to an embodiment of the present disclosure.
FIG. 14 is the first schematic structural diagram of a composition of a communication device according to an embodiment of the present disclosure.
FIG. 15 is the second schematic structural diagram of a composition of the communication apparatus according to an embodiment of the present disclosure.
FIG. 16 is the third schematic structural diagram of a composition of the communication apparatus according to an embodiment of the present disclosure.
FIG. 17 is the fourth schematic structural diagram of a composition of the communication apparatus according to an embodiment of the present disclosure.
FIG. 18 is a schematic structural diagram of a communication device according to an embodiment of the present disclosure.
FIG. 19 is a schematic structural diagram of a chip according to an embodiment of the present disclosure.
FIG. 20 is a schematic block diagram of a communication system according to an embodiment of the present disclosure.

DETAILED DESCRIPTION

Hereinafter, the technical solutions in the embodiments of the present disclosure will be described with reference to the accompanying drawings in the embodiments of the present disclosure. It is apparent that the described embodiments are part of the embodiments of the present disclosure, rather than all the embodiments. Based on the embodiments in the present disclosure, all other embodiments obtained by those skilled in the art without creative work fall within the scope of protection of the present disclosure.

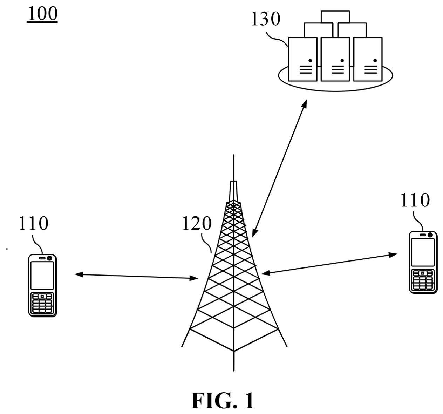

FIG. 1 is a schematic diagram of an application scenario according to an embodiment of the present disclosure.

As illustrated in FIG. 1, the communication system 100 may include terminal devices 110 and a network device 120. The network device 120 may communicate with the terminal devices 110 through an air interface. Multi-service transmission is supported between the terminal device 110 and the network device 120.

It should be understood that the embodiments of the present disclosure are only illustrated with reference to the communication system 100, but the embodiments of the present disclosure are not limited thereto. That is, the technical solutions of the embodiments of the present disclosure may be applied to various communication systems, such as a 5G communication system (also referred to as a New Radio (NR) communication system), a 6G communication system, a future communication system, or the like.

In the communication system 100 illustrated in FIG. 1, the network device 120 may be an access network device that communicates with the terminal device 110. The access network device may provide a communication coverage for a particular geographic area and may communicate with terminal devices 110 (for example, User Equipment (UE)) within the coverage area.

The network device 120 may be a base station (gNB) in the NR system, a network device in a future evolved Public Land Mobile Network (PLMN), or the like.

The terminal device 110 may be any terminal device, which includes, but is not limited to, a terminal device connected with the network device 120 or other terminal devices in wired or wireless manner.

For example, the terminal device 110 may be an access terminal, a UE, a subscriber unit, a subscriber station, a mobile station, a mobile stage, a remote station, a remote terminal, a mobile device, a user terminal, a terminal, a wireless communication device, a user agent, or a user device. The access terminal may be a cellular telephone, a cordless telephone, a Session Initiation Protocol (SIP) telephone, an IoT device, a satellite handheld terminal, a Wireless Local Loop (WLL) station, a Personal Digital Assistant (PDA), a handheld device with wireless communication functionality, a computing device or other processing device connected to a wireless modem, a vehicle-mounted device, a wearable device, a terminal device in a 5G network, or a terminal device in a future evolution network, or the like.

The terminal device 110 may be used for Device to Device (D2D) communication.

The wireless communication system 100 may further include a core network device 130 that communicates with the base station, and the core network device 130 may be a 5G Core (5GC) device. In the process of network evolution, the core network device may be called by different names, or a new network entity may be formed by dividing the functions of the core network, which is not limited by the embodiments of the present disclosure.

FIG. 1 exemplarily illustrates one base station, one core network device, and two terminal devices. Alternatively, the wireless communication system 100 may include multiple base station devices, and another number of terminal devices may be included within the coverage range of each base station, which is not limited in the embodiments of the present disclosure.

It should be noted that FIG. 1 merely exemplarily illustrates the system to which the present disclosure is applied, and of course, the method in the embodiments of the present disclosure may also be applied to other systems. In addition, terms "system" and "network" in the present disclosure may usually be interchanged in the present disclosure. In the present disclosure, the term "and/or" is only an association relationship describing associated objects and represents that three relationships may exist. For example, A and/or B may represent three conditions: i.e., independent existence of A, existence of both A and B, and independent existence of B. In addition, character "/" in the present disclosure usually represents that previous and next associated objects form an "or" relationship. It is also to be understood that the term "indication" in embodiments of the present disclosure may be a direct indication, an indirect indication, or an indication of an associative relationship. For example, A indicating B may represent that A directly indicates B, for example, B is obtained through A, or that A indirectly indicates B, for example, A indicates C and B is obtained through C, or that there is an association between A and B. It is also to be understood that the term "correspondence" in embodiments of the present disclosure may represent a direct or indirect correspondence between the two elements, or may represent an association between the two elements, or may indicate a relationship of indicating and being indicated, configuring and being configured, etc. It is also to be understood that the term "predefined" or "predefined rules" in embodiments of the present disclosure may be achieved by pre-storing corresponding codes, tables or other manners for indicating relevant information in devices (e.g., including a terminal device and a network device). The specific implementation is not limited in the present disclosure. For example, "predefined" may refer to defining in a protocol. It is also to be understood that in embodiments of the present disclosure, "protocol" may refer to a standard protocol in the field of communication, which may include, for example, a NR protocol and relevant protocol applied in the future communication system, which is not limited in the present disclosure.

To make the technical solutions of the embodiments of the present disclosure to be understood better, the related technology of the embodiments of the present disclosure is described below. The following related technology as optional solutions may be arbitrarily combined with the technical solutions of the embodiments, which shall fall within the scope of protection of the present disclosure.

The TDD refers to Time Division Duplexing, in which the UL and the DL uses the same frequency band but different times. The FDD refers to Frequency Division Duplexing, in which the UL and the DL uses the same time but different frequency bands. For the FDD, two different frequency bands are required for the UL and DL respectively, and a sufficient frequency gap, which is also called a duplexing distance, is required between these two frequency bands.

The 5G and future communication systems main rely on high-frequency spectrum, and the TDD manner is more suitable for the communication systems.

In the 5G, a TDD frame format consists of several DL slots, one Flexible slot, and several UL slots. There may be multiple DL slots, and all 14 symbols in each slot are configured for DL. There may be multiple UL slots, and all 14 symbols in each slot are configured for UL. There is one Flexible slot, in which the ratio of DL symbols, flexible symbols and UL symbols may be flexibly set. The periodicity corresponding to the TDD frame format is called a TDD periodicity or a DL-UL-Transmission Periodicity.

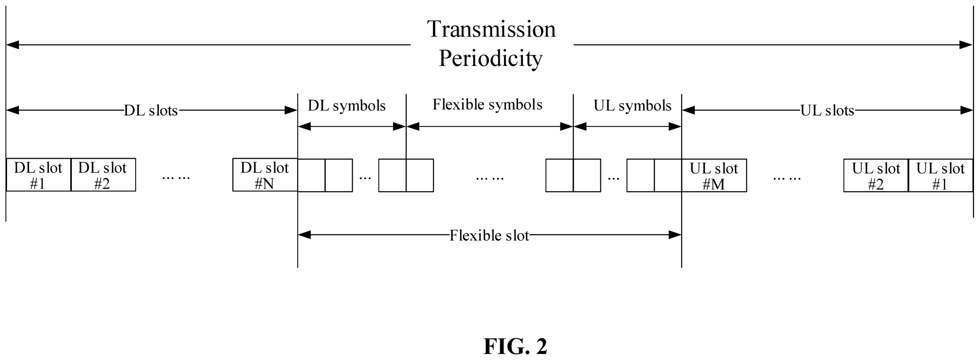

The TDD frame format are configured by two configuration manners: semi-static configuration and dynamic indication. The semi-static configuration includes a TDD UL and DL configuration per cell (i.e., TDD-UL-DL-ConfigurationCommon) and a TDD UL and DL configuration per UE (i.e., TDD-UL-DL-ConfigDedicated). As an example, FIG. 2 illustrates a pattern of a TDD frame format configured based on the TDD-UL-DL-ConfigurationCommon. TDD-UL-DL-ConfigurationCommon is configured per cell in ServingCellConfigCommonSIB through system broadcast. TDD-UL-DL-ConfigDedicated is configured per cell per UE in ServingCellConfig through RRC dedicated signaling. On the basis of the TDD frame format configured by the TDD-UL-DL-ConfigurationCommon, some flexible symbols in the TDD frame format may be configured as DL symbols or UL symbols through the TDD-UL-DL-ConfigDedicated. For semi-static configuration, statistical analysis of DL traffic and UL traffic of the network need to be performed during design. If there is a large UL traffic, a larger number of UL slots may be designed. If there is a large DL traffic, a larger number of DL slots may be designed.

On the basis of the TDD frame format that is configured semi-statically, certain flexible symbols may be indicated as DL symbols or UL symbols within a certain window through a Physical Downlink Control Channel (PDCCH) (with the format of DCI format 2-0). This manner of indicating by PDCCH is a dynamic indication manner. The resources may be dynamically allocated according to traffic demand in the dynamic indication manner, which can improve system performance and spectrum efficiency, but also results in the problem of Cross-Link Interference (CLI).

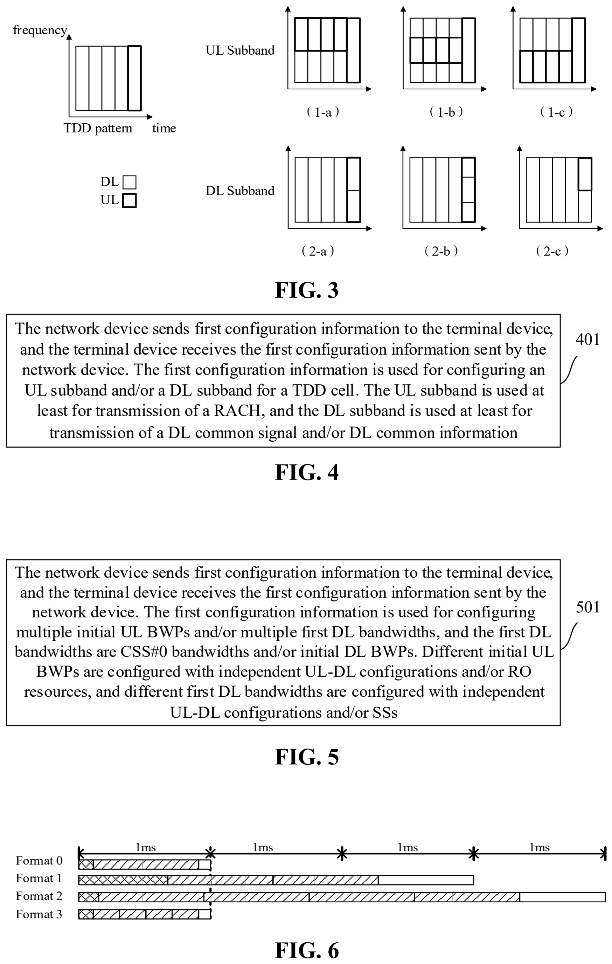

In order to improve UL coverage, reduce a time delay, increase system capacity, and improve configuration flexibility, the subband non-overlapping Full Duplex (SBFD) technology is considered to be introduced in the TDD. In the SBFD technology, an UL Subband may be configured on a DL slot and/or a flexible slot, and resources corresponding to the UL subband and the UL slot both are UL resources. A DL Subband may be configured on an UL slot and/or the flexible slot, and resources corresponding to the DL subband and the DL slot both are DL resources. As an example, FIG. 3 illustrates a schematic diagram of configuring UL subbands and DL subbands based on a TDD pattern, in which frequency domain positions of the UL subbands may occupy high Physical Resource Blocks (PRBs), middle PRBs, or low PRBs, and similarly, the positions of the DL subbands may occupy high PRBs, middle PRBs, or low PRBs.

In order to reduce the interference between TDD cells, in general, cells may have the same UL-DL ratio. However, a flexible/dynamic TDD is introduced in the NR, which causes CLI between the cells (that is, the UL sending of the interfering terminal interferes with the DL reception of the interfered terminal in the neighboring cell). Therefore, a CLI technology is introduced. In the CLI technology, measurement configuration and reporting of the CLI are based on Radio Resource Management (RRM) architecture, that is, based on Radio Resource Control (RRC) signaling. The measurement object is a Sounding Reference Signal (SRS) sent by the interfering terminal. The measurement amount includes CLI-RSSI and SRS-RSRP, and after L3 filtering, the measurement report may be event-triggered or periodic. The CLI measurement timing assumes a constant offset relative to serving DL timing, particularly for FR2, the terminal device assumes that there is a QCL type D relationship between the CLI measurement resource, and the last received Physical Downlink Shared Channel (PDSCH) and the last monitored Control Resource Set (CORESET). The R16 CLI architecture has the following disadvantages. (1) Since the R16 CLI is configured and reported based on L3, the R16 CLI lacks flexibility. Also, the CLI measurement results must be reported to the gNB-CU first, and then forwarded to the gNB-DU, which results in a large delay. CLI measurement results are subjected to L3 filtering, which is not suitable for identifying dynamic interference and fast beam selection. Furthermore, the CLI measurement configuration is updated through RRC signaling, which also results in a large delay. (2) The CLI measurement configuration does not contain beam information and depends on the implementation of the terminal device, for example, depending on the QCL-D relationship between the last received PDSCH and the latest monitored CORESET. (3) The measurement report of R16 CLI is wideband based CLI measurement, rather than subband based CLI measurement, which is not conducive to identifying leaked CLI in neighboring subbands.

The troposphere is the lowest layer of the atmosphere of Earth and is where almost all weather conditions occur. The friction between the lowest part of the troposphere and the surface of the Earth affects airflow. Under certain atmospheric conditions, stratification of air in the troposphere may form waveguides. This phenomenon is called pipeline. Radio signals entering the pipeline can propagate for kilometers. As shown in the above example, the DL signal from gNB1 propagates far due to tropospheric conduits and interferes with the UL of gNB2. This conduits phenomenon may last from a few minutes to a few hours or days. The footprint of radio waves propagating through water is very large compared to the footprint on land. The phenomenon may also cause radio signals to propagate for several kilometers. Despite the guard band, DL transmissions may propagate a long distance and interfere with the UL. To this end, R16 introduces a Remote Interference Management (RIM) mechanism, to facilitate detecting and mitigating the interference from remote base stations caused by atmospheric pipeline effects, that is to say, two base stations use the same UL-DL ratio, and due to the long distance between the two base stations, the DL transmission of the interfering base station reaches the interfered base station when the interfered base station performs the UL reception, that is, the propagation delay is greater than the guard period between the DL and UL, and the interfered base station is interfered. The interfering base stations and the interfered base stations are divided into many sets, and each set is configured with a set ID and a corresponding RIM-RS. Each cell has at most one interfered set ID and at most one interfering set ID. The interfered base station sends the RIM-RS, and after receiving the RS, the interfering base station coordinates the RIM problem through the air interface or backhaul.

Due to the introduction of SBFD, even though the SBFD is configured semi-statically, self-interference in the base station side, UE-UE CLI, and gNB-gNB CLI also exist.

To sum up, for the FDD, two different frequency bands are needed for DL and UL respectively, and a sufficient duplexing distance between these two frequency bands is required. Since there is no sufficient available frequency band, the required duplexing distance increases as the frequency band increases. Because of these challenges, TDD becomes more attractive once high-frequency spectrum (such as spectrum > 3GHz) is used. The future communication systems mainly rely on high-frequency spectrum, and TDD is more suitable in the future communication systems. In order to meet the service needs, some TDD cells are mainly for DL, and some TDD cells are mainly for UL. Therefore, TDD cells need to be re-modeled to adapt to new service requirements.

Therefore, the following technical solutions according to the embodiments of the present disclosure are proposed. In the technical solutions of the embodiments of the present disclosure, the TDD cell is re-modeled and the cell-level SBFD is introduced into the TDD cell, which has many advantages for terminal devices in RRC_IDLE and RRC_INACTIVE, such as for Random Access Channel (RACH) capacity, RACH delay, paging capacity, paging delay, system broadcast message capacity, system broadcast message delay, etc.

It should be noted that the technical solutions of the embodiments of the present disclosure may be applied to, but are not limited to, an enhanced 5G system, a 6G system, and a future evolution system.

To make the technical solutions of the embodiments of the present disclosure to be understood better, the technical solutions of the present disclosure is described in detail below. The above relevant technology as optional solutions may be arbitrarily combined with the technical solutions of the embodiments of the present disclosure, which shall fall within the scope of protection of the present disclosure. The embodiments of the present disclosure include at least part of the following contents.

FIG. 4 is the first schematic flowchart of a communication method according to an embodiment of the present disclosure. As illustrated in FIG. 4, the communication method includes the following operation.

In operation 401, a network device sends first configuration information to a terminal device, and the terminal device receives the first configuration information sent by the network device. The first configuration information is used for configuring an UL subband and/or a DL subband for a TDD cell. The UL subband is used at least for transmission of a RACH, and the DL subband is used at least for transmission of a DL common signal and/or DL common information.

In some embodiments, the network device is a base station.

In some embodiments, the first configuration information is configured by a system broadcast message (such as a System Information Block (SIB)), for example, the first configuration information is configured by SIB1.

In the embodiments of the present disclosure, the first configuration information is used for configuring the UL subband and/or the DL subband for the TDD cell. The UL subband is used at least for transmission of the RACH, and the DL subband is used at least for transmission of the DL common signal and/or DL common information.

Here, the RACH supports a long sequence format, to satisfy the demand of large coverage of the cell.

Here, the first configuration information may configure a TDD cell based on the SBFD technology. The number of UL subbands configured in the TDD cell may be one or more. The number of DL subbands configured in the TDD cell may be one or more.

It should be noted that although most of the technical solutions of the embodiments of the present disclosure are described by taking one subband as an example, the present disclosure is not limited thereto, and the technical solutions of the embodiments of the present disclosure are applicable in the case of multiple subbands.

In some embodiments, the first configuration information is used for configuring the UL subband on a first partial slot and/or the DL subband on a second partial slot. The first partial slot includes a DL slot and/or a flexible slot, and the second partial slot includes an UL slot and/or a flexible slot. Here, a TDD pattern in a DL and UL transmission periodicity (also referred to as a TDD transmission periodicity) may be determined according to the TDD frame format. The TDD frame format indicates which slots are DL slots, which slots are flexible slots, and which slots are UL slots. A part of frequency domain resources is selected in the first partial slot in the TDD transmission periodicity, as the UL subband, and/or a part of frequency domain resources is selected in the second partial slot in the TDD transmission periodicity, as the DL subband. The first partial slot includes a DL slot and/or a flexible slot, and the second partial slot includes an UL slot and/or a flexible slot. The UL subband is used at least for transmission of the RACH, and the DL subband is used at least for transmission of DL common signal and/or DL common information.

Hereinafter, solutions related to the UL subband and the DL subband are described below.

The first solution is the solution related to the UL subband.

In some embodiments, the first configuration information includes at least one of: first information for configuring a frequency domain position of the UL subband; second information for configuring a time domain position of the UL subband; or third information for configuring a Sub-Carrier Space (SCS) of the UL subband.

As one implementation, the first information indicates at least two pieces of information of the UL subband as follows: a frequency domain starting position (for example, an offset of the starting PRB of the UL subband relative to the lowest PRB of the BWP in which the UL subband is located), a frequency domain length (for example, the number of PRBs occupied by the UL subband), and a frequency domain ending position (for example, the ending PRB of the UL subband).

As an implementation, the second information indicates at least two pieces of information of the UL subband as follows: a time domain starting position (for example, a starting slot of the UL subband), a time domain length (for example, the number of slots occupied by the UL subband), and a time domain ending position (for example, an ending slot of the UL subband). Alternatively, the second information is a bitmap, each bit in the bitmap corresponds to a slot, and the value of the bit indicates whether the slot corresponding to the bit is a slot for the UL subband. Alternatively, the time domain position of the UL subband may not be configured (that is, the second information is not included in the first configuration information), and the default time domain position of the UL subband may be all DL slots and/or flexible slots in the TDD transmission periodicity.

In some embodiments, the UL subband is located within an initial UL BWP (UL BWP).

In some embodiments, the first configuration information is used for configuring an initial UL BWP in which the UL subband is configured. Alternatively, the first configuration information is used for configuring multiple initial UL BWPs in each of which the UL subband is configured.

In some embodiments, the first configuration information includes fourth information. The fourth information is used for configuring RACH Occasion (RO) resources on UL resources. The UL resources include a resource corresponding to the UL subband and/or a resource corresponding to a UL slot.

In some embodiments, the RO resource configured on the resource corresponding to the UL subband and the RO resource configured on the resource corresponding to the UL slot are together mapped to Synchronization Signal Block (SSB) indexes in a specified order. Alternatively, the RO resource configured on the resource corresponding to the UL subband and the RO resource configured on the resource corresponding to the UL slot are respectively mapped to SSB indexes in a specified order. Here, the specified order is an order in frequency domain followed by time domain or an order in time domain followed by frequency domain.

In some embodiments, the fourth information includes a set of RACH configuration information. The set of RACH configuration information is used for uniformly configuring RO resources on the resource corresponding to the UL subband and the resource corresponding to the UL slot. Alternatively, the fourth information includes two sets of RACH configuration information. One set of RACH configuration information is used for configuring the RO resource on the resource corresponding to the UL subband, and the other set of RACH configuration information is used for configuring the RO resource on the resource corresponding to the UL slot.

Here, in a case that the fourth information includes two sets of RACH configuration information, the RACH configuration information for the resource corresponding to the UL subband and the RACH configuration information for the resource corresponding to the UL slot are independently configured and may be different. Taking the parameter Mg1-FDM in the RACH configuration information as an example, Mg1-FDM represents the number of duplexing the RO resources in the frequency domain, that is, the number of continuous RO resources in the frequency domain. Considering that the bandwidth of the resource corresponding to the UL subband is narrower than that corresponding to the UL slot, Msg1-FDM with a small value (such as Mg1-FDM=2) may be configured for the resource corresponding to the UL subband, and Msg1-FDM with a large value (such as Mg1-FDM=4) may be configured for the resource corresponding to the UL slot.

In some embodiments, in addition to increasing the RO resources by the manner of UL subband, the RO resources may be increased by the following manners. The following manners for increasing the RO resources do not depend on the manner of UL subband, and may be implemented in combination with the manner of UL subband, or may be implemented independently.

The manner for increasing the RO resources may be described as follows. The RACH configuration information may include RACH time domain resource configuration information, and the RACH time domain resource configuration information may be used to configure at least one of: System Frame Numbers (SFNs) in which the RO resources are located, subframes in which the RO resources are located, slots in which the RO resources are located, starting symbols of the RO resources, or symbol lengths of the RO resources. The number of SFNs in which the RO resources are located is more than one, which can increase the RO resources. How to obtain multiple SFNs in which RO resources are located is described in the following Several manners.

In Manner 1, the SFNs in which the RO resources are located are determined according to a formula SFN mod x = y and a parameter n. Here, x represents an RO cycle, y represents an RO offset, and n represents that n consecutive SFNs starting from a SFN determined according to the formula are SFNs in which RO resources exist.

In Manner 2, the SFNs in which the RO resources are located are determined according to a formula SFN mod x = y. Here, x represents an RO cycle, y represents an RO offset, y has at least one configuration, and for each configuration of y, SFNs determined based on the formula are SFNs in which RO resources exist.

In Manner 3, the SFNs in which the RO resources are located are determined according to the formula SFN mod x = y and a parameter m. Here, x represents an RO cycle, y represents an RO offset, m represents an SFN obtained after the SFN determined based on the formula is offset by m SFNs is an SFN in which an RO resource exists, and m has at least one configuration.

In some embodiments, the terminal device selects a latest RO resource for sending the RACH based on the RO resources configured by the fourth information. Here, since the capacity of the RO resources is increased, the terminal device can select an RO resource as soon as possible to initiate the random access procedure, to reduce the RACH delay.

In the embodiments of the present disclosure, in a case that the first configuration information is used for configuring multiple initial UL BWPs, Random Access Radio Network Temporary Identifiers (RA-RNTIs) may conflict, and the problem may be solved by any one or more of the following options.

In Option 1, a RA-RNTI used in a random access procedure is determined based on an index of an initial UL BWP in which a RO resource used in the random access procedure is located.

In Option 2, the RA-RNTI used in the random access procedure is determined based on a frequency domain index of the RO resource used in the random access procedure. Frequency domain indexes of RO resources on the multiple initial UL BWPs are uniformly numbered.

In Option 3, in the multiple initial UL BWPs, a slot of at most one initial UL BWP in the same slot is an UL slot, or at most one initial UL BWP in the same slot has an RO resource.

The second Scheme is a solution related to the DL subband.

In some embodiments, the first configuration information includes at least one of: fifth information for configuring a frequency domain position of the DL subband; sixth information for configuring a time domain position of the DL subband; or seventh information for configuring a SCS of the DL subband.

As one implementation, the fifth information indicates the following at least two pieces of information of the DL subband: a frequency domain starting position (for example, an offset of the starting PRB of the DL subband relative to the lowest PRB of the BWP in which the DL subband is located), a frequency domain length (for example, the number of PRBs occupied by the DL subband), and a frequency domain ending position (for example, an ending PRB of the DL subband).

As an implementation, the sixth information indicates the following at least two pieces of information of the DL subband: a time domain starting position (for example, a starting slot of the DL subband), a time domain length (for example, the number of slots occupied by the DL subband), and a time domain ending position (for example, an ending slot of the DL subband). Alternatively, the sixth information is a bitmap, each bit in the bitmap corresponds to a slot, and the value of the bit indicates whether the slot corresponding to the bit is a slot of the DL subband. Alternatively, the time domain position of the DL subband may not be configured (that is, the sixth information is not included in the first configuration information), and the default time domain position of the DL subband may be all UL slots and/or flexible slots in the TDD transmission periodicity.

In some embodiments, the DL subband is located within the first DL bandwidth, and the first DL bandwidth is a CSS#0 bandwidth and/or an initial DL BWP.

In some embodiments, the first configuration information is used for configuring the CSS#0 bandwidth in which the DL subband is configured. Alternatively, the first configuration information is used for configuring multiple CSS#0 bandwidths in each of which the DL subband is configured.

In some embodiments, the first configuration information is used for configuring an initial DL BWP in which the DL subband is configured. Alternatively, the first configuration information is used for configuring multiple initial DL BWPs in each of which the DL subband is configured.

In some embodiments, the first configuration information includes eighth information. The eighth information is used for configuring, in DL resources, a Search Space (SS) resource and/or a Control Resource Set (CORESET) resource for a DL common signal and/or DL common information. The DL resources include a resource corresponding to the DL subband and/or a resource corresponding to a DL slot.

In some embodiments, the terminal device receives a DL common signal and/or DL common information based on the SS resource and/or the CORESET resource configured by the eighth information.

In some embodiments, the DL common signal and/or DL common information includes at least one of: a system broadcast message, a paging message, or a DL message in a random access procedure. Here, the system broadcast messages include, for example, SIB1 or OSI. The DL message in the random access procedure includes, for example, MSG2, MSG4, or MSGB.

Here, if the DL common signal and/or DL common information are repeatedly transmitted, the DL common signal and/or DL common information are repeatedly transmitted by using a frequency hopping manner.

In some embodiments, in a case that the first configuration information is used for configuring multiple initial UL BWPs and multiple initial DL BWPs, the first configuration information is further used for configuring an association relationship between the multiple initial UL BWPs and the multiple initial DL BWPs. An initial UL BWP and an initial DL BWP that have the association relationship are used for UL sending and DL reception that have an association relationship, respectively.

Here, optionally, the UL sending is MSG1 sending and the DL reception is MSG2 reception, or the UL sending is MSG3 sending and the DL reception is MSG4 reception, or the UL sending is MSGA sending and the DL reception is MSGB reception.

In some embodiments, the first configuration information includes ninth information. The ninth information is used for configuring one or more CORESETs within the first DL bandwidth. The first DL bandwidth is a CSS#0 bandwidth and/or an initial DL BWP.

In a case that the ninth information configures one CORESET, the CORESET and an SS associated with the CORESET are used to determine Physical Downlink Control Channel (PDCCH) Occasions (POs) on DL resources. The DL resources include a resource corresponding to the DL subband and a resource corresponding to a DL slot. As an example, one CORESET is configured at the network side, and the CORESET is effective on the DL slot and the flexible slot, and also is effective on the DL subband. The effective PDCCH occasions associated with this CORESET need to be uniformly numbered and mapped to the SSBs.

In another case that the ninth information configures multiple CORESETs, different CORESETs are associated with the same or different SSs, and the multiple CORESETs include the first CORESET and the second CORESET. The first CORESET and an SS associated with the first CORESET are used to determine a PO on the resource corresponding to the DL subband. The second CORESET and an SS associated with the second CORESET are used to determine a PO on the resource corresponding to the DL slot.

In any one of the above cases, the PO on the resource corresponding to the DL slot and the PO on the resource corresponding to the DL subband are uniformly numbered.

In any one of the above cases, the PO on the resource corresponding to the DL slot and the PO on the resource corresponding to the DL subband are mapped to SSB indexes in chronological order.

In some embodiments, the terminal device monitors a PDCCH scheduling the DL common signal and/or DL common information on the POs.

In the embodiments of the present disclosure, in order to be compatible with the low-end terminal device, there is no effective physical isolation to avoid the UE self-interference, and the implementation of the network side and/or the terminal device side is required for avoiding the UE self-interference caused by simultaneous sending and reception. Specifically, several solutions are described as follows.

In Solution a), in the first configuration information, a time domain position corresponding to the DL common signal and/or DL common information does not overlap, in the first configuration information, with a time domain position corresponding to a RO resource.

In Solution b), in the first configuration information, a frequency domain position corresponding to the DL common signal and/or DL common information and a frequency domain position corresponding to a RO resource and a frequency domain position corresponding to the DL common signal and/or DL common information in the first configuration information satisfy a specified frequency domain interval.

In Solution c), the terminal device does not send the RACH in a process of receiving the DL common signal and/or DL common information based on the first configuration information, or the terminal device does not receive the DL common signal and/or DL common information in a process of sending the RACH based on the first configuration information.

In some embodiments, the terminal device acquires that the network device has a capacity of supporting cell-level SBFD, and/or the terminal device indicates to the network device that the terminal device has a capacity of supporting cell-level SBFD. The network device indicates to the terminal device that the network device has a capacity of supporting cell-level SBFD, and/or the network device acquires that the terminal device has a capacity of supporting cell-level SBFD.

Here, the terminal device may acquire that the network device has a capacity of supporting cell-level SBFD by the following manners.

In Manner 1-1, the terminal device determines, through the first configuration information, that the network device has the capacity of supporting cell-level SBFD.

In Manner 1-2, the terminal device receives first indication information sent by the network device, and the first indication information indicates that the network device has the capacity of supporting cell-level SBFD.

Accordingly, the network device may indicate to the terminal device that the network device has the capacity of supporting cell-level SBFD by the following manners.

In Manner 2-1), the network device indicates to the terminal device, through the first configuration information, that the network device has the capacity of supporting cell-level SBFD.

In Manner 2-2), the network device sends the first indication information to the terminal device, and the first indication information indicates that the network device has the capacity of supporting cell-level SBFD.

Here, the terminal device may indicate to the network device that the terminal device has the capacity of supporting cell-level SBFD by the following manners.

In Manner 1-3, the terminal device indicates to the network that the terminal device has the capacity of supporting cell-level SBFD by sending a RACH on the UL subband.

In Manner 1-4, the terminal device indicates, to the network device, that the terminal device has the capacity of supporting cell-level SBFD by sending a preamble belonging to the first preamble group in the RACH, and the first preamble group is configured by the network device for a terminal device has the capacity of supporting cell-level SBFD.

In Manner 1-5, the terminal device indicates to the network device, through MSG 3, the capability that the terminal device supports cell SBFD.

Specifically, the terminal device indicates to the network that the terminal device has the capacity of supporting cell-level SBFD through second indication information carried in the MSG 3. Alternatively, the terminal device indicates to the network device that the terminal device has the capacity of supporting cell-level SBFD through a locale Identifier (LCID) of a Common Control Channel (CCCH) in which the MSG3 is located.

In Manner 1-6, the terminal device indicates to the network device, through MSG 5, that the terminal device has the capacity of supporting cell-level SBFD.

Specifically, the terminal device indicates to the network that the terminal device has the capacity of supporting cell-level SBFD through third indication information carried in MSG 5.

Accordingly, the network device may acquire that the terminal device has the capacity of supporting cell-level SBFD by the following manners.

In Manner 2-3, the network device acquires that the terminal device has the capacity of supporting cell-level SBFD through a RACH sent by the terminal device on the UL subband.

In Manner 2-4, the network device acquires that the terminal device has the capacity of supporting cell-level SBFD through a preamble belonging to the first preamble group sent by the terminal device in the RACH, and the first preamble group is configured by the network device for a terminal device which has the capacity of supporting cell-level SBFD.

In Manner 2-5, the network device acquires that the terminal device has the capacity of supporting cell-level SBFD through MSG 3 sent by the terminal device.

Specifically, the network device acquires that the terminal device has the capacity of supporting cell-level SBFD through second indication information carried in MSG3 sent by the terminal device. Alternatively, the network device acquires that the terminal device has the capacity of supporting cell-level SBFD through a LCID of a CCCH in which MSG3 sent by the terminal device is located.

In Manner 2-6, the network device acquires that the terminal device has the capacity of supporting cell-level SBFD through MSG 5 sent by the terminal device.

Specifically, the network device acquires that the terminal device has the capacity of supporting cell-level SBFD through third indication information carried in MSG 5 sent by the terminal device.

In the embodiments of the present disclosure, in order to avoid the problem of CLI, the following solutions are proposed.

In Solution A, the network device is a first base station. The first base station sends first negotiation information to a second base station and/or receives second negotiation information sent by the second base station. The first negotiation information is information, related to an RO, configured by the first base station, and the second negotiation information is information related to a DL common signal and/or DL common information on the second base station side. The first negotiation information is used by the second base station to adjust the information related to the DL common signal and/or DL common information on the second base station side, and the second negotiation information is used by the first base station to adjust information related to the RO configured by the first base station. At least one of following condition is satisfied after the information is adjusted.

No DL common signal and/or DL common information is sent at a time domain position of the RO.

The time domain position of the RO and a time domain position of the DL common signal and/or DL common information do not overlap.

A frequency domain position of the RO and a frequency domain position of the DL common signal and/or DL common information satisfy a specified frequency domain interval.

In Solution B, the network device configures different preamble target received powers for a RO in the UL subband and a RO in an UL slot. A preamble target received power corresponding to the RO in the UL subband is less than a preamble target received power corresponding to the RO in the UL slot.

In Solution C, the UL subband and the DL subband configured by the same network device satisfy a specified frequency domain interval, and/or the UL subband and the DL subband configured by different network devices satisfy a specified frequency domain interval.

In the technical solutions of the embodiments of the present disclosure, a TDD cell supporting cell level SBFD is defined, the UL subband increases the RACH capacity, and reduces the RACH delay, and the DL subband increases the capacity of the DL common signal and/or DL common information (such as SIB, paging, etc.), and reduces the delay of the DL common signal and/or DL common information (such as SIB, paging, etc.), so that the cell is more flexible in high-frequency deployment.

FIG. 5 is the second schematic flowchart of a communication method according to an embodiment of the present disclosure. As illustrated in FIG. 5, the communication method includes the following operation.

In operation 501, the network device sends first configuration information to the terminal device, and the terminal device receives the first configuration information sent by the network device. The first configuration information is used for configuring multiple initial UL BWPs and/or multiple first DL bandwidths, and the first DL bandwidths include CSS#0 bandwidths and/or initial DL BWPs. Different initial UL BWPs are configured with independent UL-DL configurations and/or RO resources, and different first DL bandwidths are configured with independent UL-DL configurations and/or SSs.

In some embodiments, the network device is a base station.

In some embodiments, the first configuration information is configured by a system broadcast message (such as SIB), for example, the first configuration information is configured by SIB1.

In the embodiment of the present disclosure, the first configuration information is used for configuring multiple initial UL BWPs and/or multiple first DL bandwidths, and the first DL bandwidths include CSS#0 bandwidths and/or initial DL BWPs. Different initial UL BWPs are configured with independent UL-DL configurations and/or RO resources, and different first DL bandwidths are configured with independent UL-DL configurations and/or SSs. The RO resources may be increased through multiple initial UL BWPs, and the resources of DL common signal and/or DL common information may be increased through multiple first DL bandwidths.

Here, the UL-DL configuration refers to a TDD configuration, for example, tdd-UL-DL-ConfigurationCommon.

In some embodiments, the terminal device selects a latest RO resource for sending a RACH based on the RO resources configured by the first configuration information. Here, since the capacity of the RO resources is increased, the terminal device can select an RO resource as soon as possible to initiate the random access procedure, to reduce the RACH delay.

In the embodiment of the present disclosure, the first configuration information is used for configuring multiple initial UL BWPs, and RA-RNTIs may conflict. The problem may be solved by any one or more of the following options.

In Option 1, the RA-RNTI used in a random access procedure is determined based on an index of an initial UL BWP in which a RO resource used in the random access procedure is located.

In Option 2, the RA-RNTI used in the random access procedure is determined based on a frequency domain index of the RO resource used in the random access procedure. Frequency domain indexes of RO resources on the multiple initial UL BWPs are uniformly numbered.

In Option 3, in the multiple initial UL BWPs, a slot of at most one initial UL BWP in the same slot is an UL slot, or at most one initial UL BWP in the same slot has an RO resource.

In some embodiments, the device receives a DL common signal and/or DL common information based on the SSs configured by the first configuration information.

In some embodiments, the DL common signal and/or DL common information includes at least one of: a system broadcast message, a paging message, or a DL message in a random access procedure. Here, the system broadcast message includes, for example, SIB1 or OSI. The DL message in the random access procedure includes, for example, MSG2, MSG4, or MSGB.

In some embodiments, in a case that the first configuration information is used for configuring multiple initial UL BWPs and multiple initial DL BWPs, the first configuration information is further used for configuring an association relationship between the multiple initial UL BWPs and the multiple initial DL BWPs. An initial UL BWP and an initial DL BWP that have the association relationship are used for UL sending and DL reception that have an association relationship, respectively.

Here, optionally, the UL sending is MSG1 sending and the DL reception is MSG2 reception, or the UL sending is MSG3 sending and the DL reception is MSG4 reception, or the UL sending is MSGA sending and the DL reception is MSGB reception.

Hereinafter, the technical solutions of the embodiments of the present disclosure are described with reference to specific application examples.

Application Example 1

In this application example, a network device (hereinafter referred to as a network side) configures a RACH (or PRACH) in a long sequence format to support a TDD cell with large coverage.

There are many formats of the RACH, which includes long sequence format and short sequence format.

In the long sequence format, the sequence length is 839 and as illustrated in FIG. 6, the long sequence format includes formats 0, 1, 2, and 3, and supports an unrestricted set, restricted set Type A, and restricted set Type B. The SCS of the formats 0, 1 and 2 is 1.25 kHz. The SCS of the format 3 is 5 kHz.

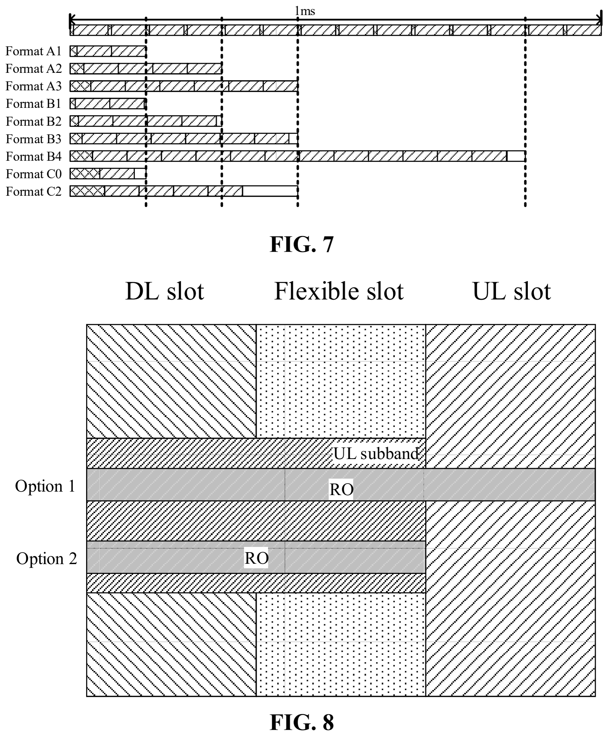

In the short sequence format, the sequence length is 139, and as illustrated in FIG. 7, the short sequence format includes formats A1/A2/A3, B1/B2/B3/B4 and C0/C2, and supports the unrestricted set. The SCS supported by the short sequence format includes 15/30/60/120 kHz. FR1 (below 6 GHz) supports 15/30 kHz and FR2 (above 6 GHz) supports 60/120 kHz.

The long sequence format is applied into large coverage scenarios, and one RO resource occupied several consecutive milliseconds. For TDD scenarios and DL-dominated scenarios, few RO resources may be configured in long sequence format, and the random access delay will be affected. By using the SBFD technology, not only RO resources that may be configured in long sequence format can be increased, but also the RACH capacity can be increased and random access delay can be reduced.

In this application example, the network side configures the UL subband through a system broadcast message (such as SIB1). The network side configures at least one of the following information: first information for configuring a frequency domain position of the UL subband; the second information for configuring a time domain position of the UL subband; or the third information for configuring a SCS of the UL subband.

As an implementation, the first information indicates the following at least two pieces of information of the UL subband: a frequency domain starting position (for example, an offset of the starting PRB of the UL subband relative to the lowest PRB of the BWP in which the UL subband is located), a frequency domain length (for example, the number of PRBs occupied by the UL subband), and a frequency domain ending position (for example, an ending PRB of the UL subband).

As an implementation, the second information indicates the following at least two pieces of information of the UL subband: a time domain starting position (for example, a starting slot of the UL subband), a time domain length (for example, the number of slots occupied by the UL subband), and a time domain ending position (for example, an ending slot of the UL subband). Alternatively, the second information is a bitmap, each bit in the bitmap corresponds to a slot, and the value of the bit indicates whether the slot corresponding to the bit is a slot of the UL subband. Alternatively, the time domain position of the UL subband may not be configured (that is, the second information is not included in the first configuration information), and the default time domain position of the UL subband may be all DL slots and/or flexible slots in the TDD transmission periodicity.

Referring to FIG. 8, FIG. 8 illustrates a schematic diagram of an UL subband, and the resource corresponding to the UL subband and the resource corresponding to the UL slot are both the UL resources. The network side may configure, on the whole UL resources, the starting slot, the number of consecutive slots, and the ending slot for the RO resources in the long sequence format (option 1 in FIG. 8). Alternatively, the network side may configure, on the resource corresponding to the UL subband, the starting slot, the number of consecutive slots, and the ending slot for the RO resources in the long sequence format (option 2 in FIG. 8).

Application Example 2

tdd-UL-DL-ConfigurationCommon is configured per cell in ServingCellConfigCommonSIB by system broadcast, and TDD-UL-DL-ConfigDedicated is configured per cell per UE in ServingCellConfig by RRC dedicated signaling. In the NR, there is only one initial UL BWP, and the RO resources are configured only on the initial UL BWP for initial access of the terminal device. The configuration path of the RO resources is ServingCellConfigCommonSIB→ UplinkConfigCommon-SIB→ initialUplinkBWP→ rach-ConfigCommon. In the TDD system, the periodicity for the RO resource may be relatively long, and because the RO resources are configured on the available UL slot, the initial access delay may be increased compared with the FDD system. This problem may be solved by the following solutions.

In the first solution, the network side configures multiple initial UL BWPs through a system broadcast message, and each initial UL BWP is configured with a respective tdd-UL-DL-ConfigurationCommon and/or RO resource, that is, a tdd-UL-DL-ConfigurationCommon and/or RO resource are configured per initial UL BWP. When initiating the random access procedure, the terminal device may select the latest RO resource in time and the initial UL BWP in which the RO resource is located to initiate the random access procedure, thereby reducing the delay of the random access.

Regarding the mapping relationship between the RO resources and the SSB indexes, the RO resources on multiple initial UL BWPs may be associatively mapped together to the SSB indexes in a specific order (for example, the order of frequency domain followed by time domain), or the RO resource on each initial UL BWP may be independently mapped to the SSB index.

In the second solution, the network side configures one initial UL BWP through a system broadcast message, and configures an UL subband in the initial UL BWP. Specifically, the UL subband is used for the UL resource in an area where the UL subband overlaps with a DL slot and/or a flexible slot in a time domain. One or more UL subbands may be configured. Further, the network side configures RO resources on UL resources (a resource corresponding to the UL subband and/or a resource corresponding to the UL slot). As described above, the SBFD technology is used to configure the UL subband on the DL slot and/or the flexible slot for configuration the RO resources, which can reduce the random access delay and further reduce the transition delay of the terminal device from the RRC idle state to the RRC connected state.

Regarding the mapping relationship between the RO resources and the SSB indexes, the RO resource on the resource corresponding to the UL subband and the RO resource on the resource corresponding to the UL slot may be associatively mapped together to the SSB indexes in a specified order (for example, the order of frequency domain followed by time domain).

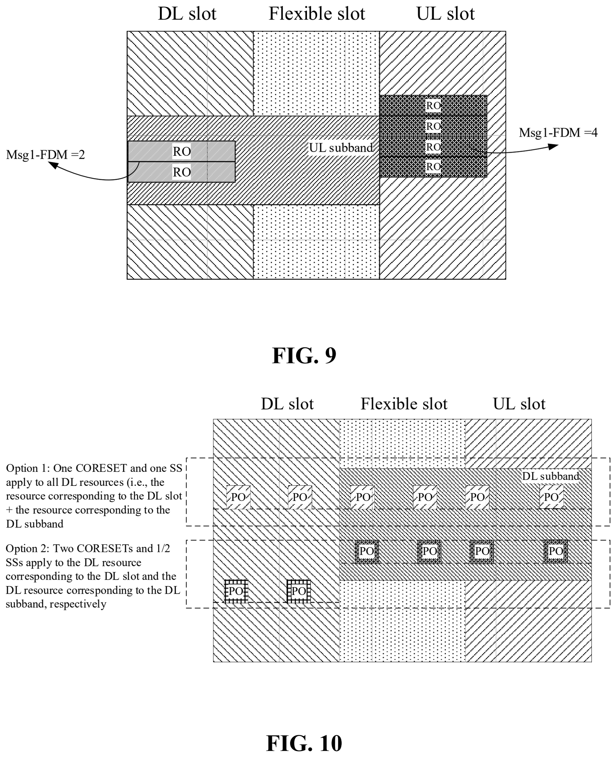

Referring to FIG. 9, FIG. 9 illustrates a schematic diagram of RO resources. The network side may configure independent RACH configuration information for the UL subband and the UL slot, respectively. Taking the parameter Msg1-FDM in the RACH configuration information as an example, the Msg1-FDM represents the number of duplexing of RO resources in the frequency domain, that is, the number of continuous RO resources in the frequency domain. Considering that the bandwidth of the resource corresponding to the UL subband is narrower than that corresponding to the UL slot, Msg1-FDM with a small value (such as Mg1-FDM=2) may be configured for the resource corresponding to the UL subband, and Msg1-FDM with a large value (such as Mg1-FDM=4) may be configured for the resource corresponding to the UL slot.

In the third solution, the network side configures multiple initial UL BWPs through a system broadcast message, each initial UL BWP is configured with an UL subband and an RO resource on UL resources (a resource corresponding to an UL subband and/or a resource corresponding to an UL slot) according to the second solution.

In addition to increasing the RO resources by the UL subband, the RO resources may be increased by the following manners. The following manners for increasing the RO resources may be implemented in combination with the solution of UL subband, or may be implemented independently of the solution of UL subband.

In the NR, the formula SFN mod x = y is used to determine the SFNs in which the RO resources exist, that is, the RO resource is present on only one SFN in an RO periodicity. In order to increase RO resources and increase the RO capacity, any one or more of the following manners may be used.

In manner 1, the SFNs in which the RO resources are located are determined according to a formula SFN mod x = y and a parameter n. Here, x represents an RO cycle, y represents an RO offset, and n represents that n consecutive SFNs starting from a SFN determined according to the formula are SFNs in which RO resources exist.

In manner 2, the SFNs in which the RO resources are located are determined according to a formula SFN mod x = y. Here, x represents an RO cycle, y represents an RO offset, y has at least one configuration, and for each configuration of y, SFNs determined based on the formula are SFNs in which RO resources exist.

In manner 3, the SFNs in which the RO resources are located are determined according to the formula SFN mod x = y and a parameter m. Here, x represents an RO cycle, y represents an RO offset, m represents an SFN obtained after the SFN determined based on the formula is offset by m SFNs is an SFN in which an RO resource exists, and m has at least one configuration.

Application Example 3

There is only one initial DL BWP in the NR. In the initial access procedure, the terminal device receives the DL common signal and/or DL common information such as SSB, SIB, paging, etc. on CSS#0 bandwidth (which is configured by pdcch-ConfigSIB1 in MIB) before receiving MSG4. During a time duration after receiving the MSG4 and before acquiring the dedicated BWP configuration, the terminal device receives any DL/UL scheduling within this duration on the initial DL BWP configured by SIB1. The configuration path for the initial DL BWP is: ServingCellConfigCommonSIB→ DownlinkConfigCommonSIB→ initialDownlinkBWP. In the TDD system, both SIB and paging are sent based on beam sweeping, and beam sweeping is based on effective DL slots. Therefore, compared with the FDD system, TDD system has a higher time delay in receiving the SIB and paging. This problem may be solved by the following solutions.

In Solution 1, the network side configures multiple CSS#0 bandwidths through the MIB, and each CSS#0 bandwidth is configured with its respective tdd-UL-DL-ConfigurationCommon. The configuration of tdd-UL-DL-ConfigurationCommon may be specified based on the table defined by the protocol, and only indexes in the table is configured in the MIB. The indexes may indicate the tdd-UL-DL-ConfigurationCommon configuration, or a tdd-UL-DL-Configuration-Common configuration and CSS#0 bandwidth.

In solution 2, in the stage before cell search or cell camping, the terminal device acquires SIB1 on the CSS#0 bandwidth configured in the MIB. In the stage that the terminal device has camped in the cell, the terminal device acquires updated system broadcast information and/or paging message and/or MSG2/4/B in the random access procedure on the initial BWP configured in the SIB 1. The network side configures multiple initial DL BWPs through the SIB1, and each initial DL BWP is configured with a respective tdd-UL-DL-ConfigurationCommon and/or a common control resource (such as SS and/or CORESET), and the common control resource is used by the terminal device to receive a DL common message and/or information, such as SIB1, OSI, paging message, MSG2/4/B in a random access procedure, or the like. That is, the tdd-UL-DL-ConfigurationCommon and/or the common control resource (such as SS and/or CORESET) are configured per initial UL BWP. The terminal device may receive the DL common message and/or information on the latest common control resource.

In Solution 3, the network side configures a CSS # 0 bandwidth through the MIB, and configures a DL subband within the CSS#0 bandwidth, specifically, the DL subband is used for the DL resource in an area where the DL subband overlaps with a UL slot and/or a flexible slot in a time domain. One or more DL subbands may be configured. Further, the network side configures the common control resource (such as SS and/or CORESET) on DL resources (the resource corresponding to the DL subband and/or the resource corresponding to the DL slot). In this way, the SBFD technology is used to configure the DL subband on the UL slot and/or the flexible slot for configuring the common control resource (such as SS and/or CORESET), thereby reducing the reception delay of the DL common message and/or the DL common information.

In Solution 4, the network side configures an initial DL BWP through SIB1, and configures a DL subband within the initial DL BWP. Specifically, the DL subband is used for the DL resource in an area where the DL subband overlaps with a UL slot and/or a flexible slot in a time domain. One or more DL subbands may be configured. Further, the network side configures the common control resource (such as SS and/or CORESET) on the DL resources (the resource corresponding to the DL subband and/or the resource corresponding to the DL slot). In this way, the SBFD technology is used for configuring the DL subband on the UL slot and/or the flexible slot for configuration of common control resources (such as SS and/or CORESET), thereby reducing the delay of the DL common message and/or DL common information. Here, the terminal device which has camped in the cell is required to acquire the DL common message and/or information, such as updated system broadcast information, paging message, and MSG2/4/B in the random access procedure, on the initial DL BWP configured by SIB1.

In Solution 5, the network side configures multiple CSS#0 bandwidths through the MIB, each CSS#0 bandwidth is configured with a DL subband and a common control resource (such as SS and/or CORESET) on the DL resources (a resource corresponding to the DL subband and/or a resource corresponding to the DL slot) according to the third solution.

In Solution 6, the network side configures multiple initial DL BWPs through SIB1, each initial DL BWP is configured with a DL subband and a common control resource (such as SS and/or CORESET) on the DL resources (a resource corresponding to the DL subband and/or a resource corresponding to the DL slot) according to the fourth solution.

According to the above solutions, more DL resources can be configured, which can reduce the delay of the DL common message and/or information.

Application Example 4

In the NR, RA-RNTI is calculated according to a formula as follows:

$$\text{RA-RNTI} = 1 + s\_id + 14 \times t\_id + 14 \times 80 \times f\_id + 14 \times 80 \times 8 \times ul\_carrier\_id;$$

MSGB-RNTI = 1 + s_id + 14 $\times$ t_id + 14 $\times$ 80 $\times$ f_id + 14 $\times$ 80 $\times$ 8 $\times$ ul_carrier_id + 14 $\times$ 80 $\times$ 8 $\times$ 2.

It should be noted that the RA-RNTI is used for scrambling and descrambling MSG2 in the 4-step random access procedure, and RA-RNTI is used for scrambling and descrambling MSGB in a 2-step random access procedure. Compared with the formula of calculating the RA-RNTI, the formula of calculating the MSGB-RNTI is added by 14 $\times$ 80 $\times$ 8 $\times$ 2, which ensures that the RNTIs of the 2-step random access procedure and the 4-step random access procedure do not conflict.

In the formula of calculating the RA-RNTI, s_id represents a symbol index of the first symbol of the RO resource, and the range of a value is $0 \leq s\_id < 14$, t_id represents a slot index of the first slot of the RO resource, and the range of a value is $0 \leq t\_id < 80$, f_id represents a frequency domain index of the RO resource, and the range of a value is $0 \leq f\_id < 8$, ul_carrier_id represents an UL carrier index used for the RACH, and has a value of 0 for a Normal UL (NUL) carrier and a value of 1 for a Supplementary Uplink (SUL) carrier.

In a case that the network device configures more than one UL initial BWPs, the RA-RNTIs may conflict. Specifically, in a case that the number of UL initial BWPs is more than one, if there is only one DL initial BWP, that is, there is only one DL BWP that receives MSG2/4/B, or there are multiple DL initial BWPs, but the terminal device receives MSG2/4/B on one of the DL initial BWPs, it is necessary to distinguish RACH accesses from different initial UL BWPs. Thus, the problem may be solved by any one or more of the following options.

In the first Option, different UL initial BWPs should be considered in the calculation of the RA-RNTIs. Specifically, the RA-RNTI used in the random access procedure is determined based on the index of the UL initial BWP in which the RO resource used in the random access procedure is located.

For example: RA-RNTI = 1 + s_id + 14 $\times$ t_id + 14 $\times$ 80 $\times$ f_id + 14 $\times$ 80 $\times$ 8 $\times$ ul_carrier_id + 14 $\times$ 80 $\times$ 8 $\times$ 2

$\times$ init _ ul _ bwp _ index. Here, init _ ul _ bwp _ index represents the index of the UL initial BWP in which the RO resource is located.

In the second Option, the RA-RNTI used in the random access procedure is determined based on the frequency domain index of the RO resource used in the random access procedure, and the frequency domain indexes of RO resources on the multiple initial UL BWPs are uniformly numbered. Specifically, the formula of calculating the RA-RNTI remains unchanged, f _ id in the formula represents the frequency domain index of the RO resource, and the f _ id of the RO resources on multiple initial UL BWPs may be uniformly numbered, for example, the f_id is numbered from 0 from low frequency to high frequency, and the value of f _ id ranges 0 to 8 $\times$ the number of initial UL BWPs.

In the third Option, the network side configures the tdd-UL-DL-ConfigurationCommon and the RO resource on each initial UL BWP to ensure that there is only one UL slot in the same slot or the RO resource is configured on only one UL slot.

It should be noted that the RA-RNTI in the above solutions may be an RNTI in the 4-step random access procedure or an RNTI in the 2-step random access procedure.

The terminal device may select the latest RO resource to initiate the random access procedure, and receive the MSG2/4/B at a position on any DL initial BWP or DL subband in which the DL resource exists. The MSG2/4/B may be repeatedly transmitted by frequency hopping transmission, that is, the terminal device may receive the MSG2/4/B on an initial DL BWP or a DL subband in which the DL resource exists. Here, in case that the number of DL initial BWPs is more than one, the DL initial BWP on which the terminal device receives the MSG2/4/B may be determined based on the UL initial BWP for sending the RACH. Specifically, the network side configures the association relationship between the DL initial BWPs and the UL initial BWPs through the system broadcast message, and after the terminal sends the RACH on one UL initial BWP, the terminal receives the MSG2/4/B on the DL initial BWP associated with the UL initial BWP.

In addition, when configuring the RO resources on the UL subband, the network side can ensure that there is only one UL slot in the same slot or only one UL slot has the RO resource configuration, to avoid the collision of the RA-RNTIs.

Application Example 5

When configuring the CORESET, the network side may configure a mirror CSS#0 based on the configuration of CSS # 0. The mirror CSS#0 has a frequency domain position different from the CSS#0. For example, an offset in the frequency domain is configured through a system broadcast message. Then, regardless of the CSS#0 or the mirror CSS#0, as long as there is a position of the DL resource in the time domain, the configuration of CSS#0 and the configuration of SS corresponding to the CSS#0 may take effect.

Referring to FIG. 10, FIG. 10 illustrates a schematic diagram of PDCCH Occasion (PO) resources. In the first Option, the network side may configure one CORESET, and the configuration is applied to all DL resources (the resource corresponding to the DL subband and the resource corresponding to the DL slot). In the second Option, the network side may configure two CORESETs, and the two CORESETs are respectively applied to the resource corresponding to the DL subband and the resource corresponding to the DL slot.

For one CORESET, the PO on the resource corresponding to the DL slot corresponding to the CORESET and the PO on the resource corresponding to the DL subband corresponding to the CORESET are uniformly numbered, and are mapped to the SSB indexes in chronological order. When the terminal device receives the DL common signal and/or information (such as SIB, paging message), the terminal device uniformly numbers valid POs for the same CORESET and uniformly maps to the SSB indexes.

Further, the network side may configure one SS, and the configuration is applied to all DL resources (the resource corresponding to the DL subband and the resource corresponding to the DL slot). Alternatively, the network side may configure two SSs, and the two SSs are respectively applied to the resource corresponding to the DL subband and the resource corresponding to the DL slot. For one SS, the PO on the resource corresponding to the DL slot corresponding to the SS and the PO on the resource corresponding to the DL subband corresponding to the SS are uniformly numbered and mapped to SSB indexes in chronological order.

Application Example 6

In order to be compatible with the low-end terminal device, there is no effective physical isolation to avoid the UE self-interference, and the implementation of the network side and/or the terminal device side is required for avoiding the UE self-interference caused by simultaneous sending and reception. Specifically, several solutions are described as follows.

In Solution a), the network side does not configure the RO resource in a time domain position in which the DL common signal and/or DL common information (such as SSB, SIB, paging messages) exists.

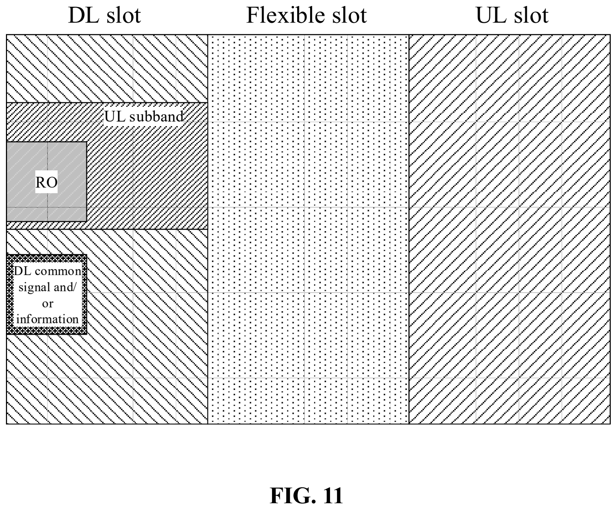

In Solution b), if the time domain position of the DL common signal and/or DL common information (such as SSB, SIB, paging message) configured by the network side overlaps with the time domain position of the RO resource, as illustrated in FIG. 11, the network side separate the frequency domain position of the resource corresponding the DL common signal and/or DL common information far apart from the frequency domain position of the RO resource by using a frequency domain isolation manner.

In Solution c), the terminal device does not simultaneously receive DL common signal and/or DL common information (such as SSB, SIB, paging message) and send the RACH. For example, since the terminal device has already camped in the cell, the terminal device may not acquire the DL common signal and/or DL common information (such as SSB, SIB, paging message) in the process of initiating the RACH, and thus the terminal device may send the RACH without receiving the DL common signal and/or DL common information. If the terminal device needs acquiring the DL common signal and/or DL common information, the terminal device may delay sending the RACH.

Application Example 7

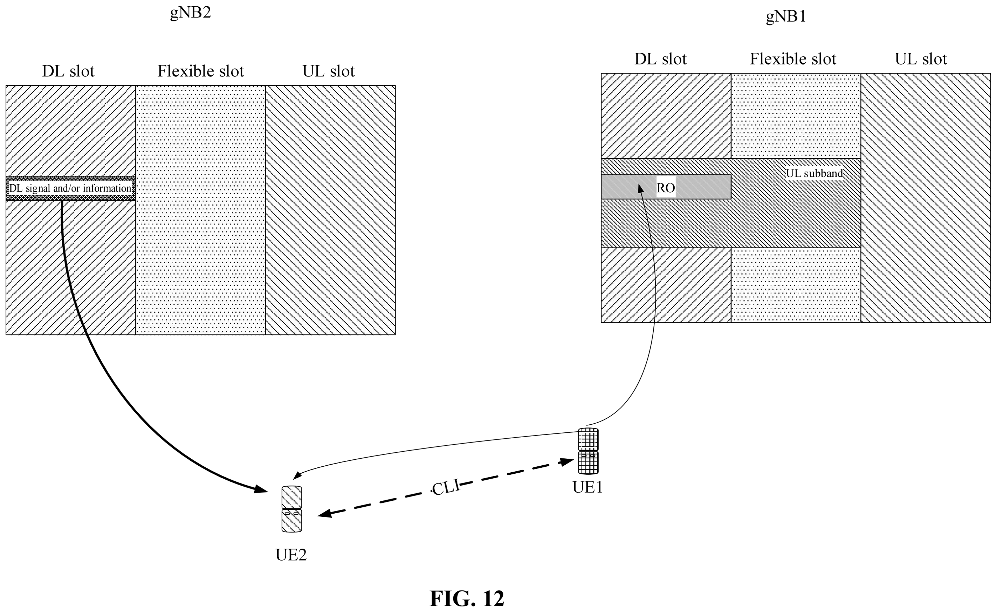

If the UL subband of the current cell is not configured as the UL subband of the neighboring cell, when the terminal device sends the RACH on the RO, DL reception of the terminal device in the neighboring cell will be interfered with, that is, the UE-to-UE CLI. As illustrated in FIG. 12, the TDD cell under the gNB1 is configured with an UL subband, while the TDD cell under the gNB2 is not configured with an UL subband. The UE1 sends the RACH in the RO of the UL subband, which may interfere with the DL reception of the UE2.

In Case 1, in the case where the interfered terminal device is in the RRC idle state or the RRC inactive state, the interfered terminal device mainly receives the DL common signal and/or DL common information (such as SIB and paging message). Therefore, the CLI problem may be avoided by a solution implemented on the network side, for example, information such as configuration for the RO resource and configuration of sending the DL common signal and/or DL common information are interacted between two base stations, so that the two base stations cannot receive the DL common signal and/or DL common information when sending the RACH. Alternatively, the interference is isolated in time and/or frequency by efficiently configuring frequency domain positions and/or time domain positions of the RO resource and DL common signal and/or DL common information. Alternatively, a received power value expected by the network side is additionally configured for such RO resource for which the CLI problem may exist, that is, a separate preambleReceivedTargetPower is configured for such RO resource to reduce the sending power on such RO.

In Case 2, in case where the interfered terminal device is in the RRC connected state, the interfered network side can implement avoiding the interference, that is, the interfered network device does not perform DL scheduling at the position of the UL subband. Alternatively, the interference may be avoided and reduced according to the connected state CLI mechanism.

Regardless of Case 1 or Case 2, such cell level subband may be uniformly configured throughout the network, and interference in the inter-subband CLI can be reduced through a gurdband.

Application Example 8

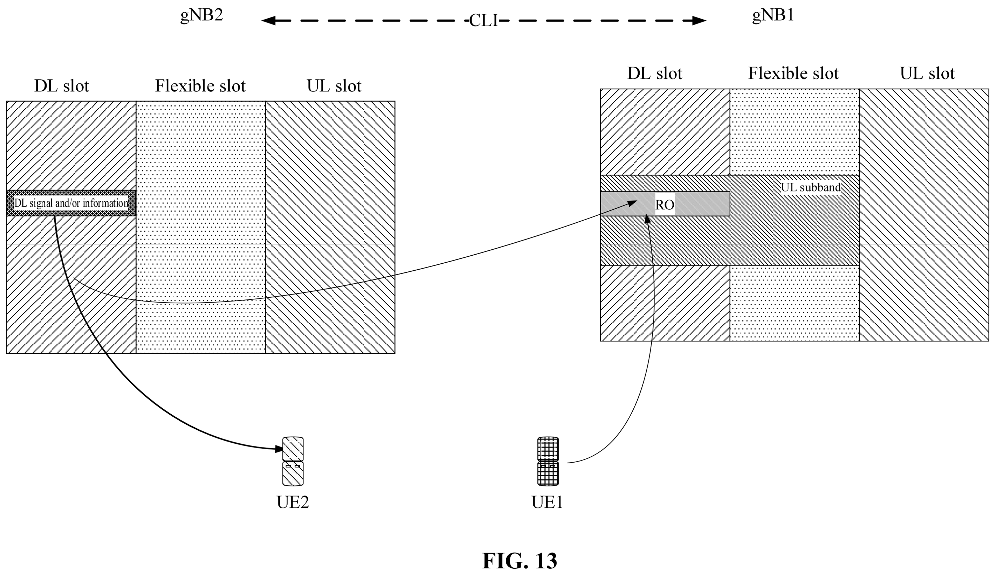

If the UL subband of the current cell is not configured as the UL subband of the neighboring cell, when the interfering base station performs DL sending in the DL slot, the DL sending may interfere with UL reception of the interfered base station on the UL subband, that is, the gNB-to-gNB CLI. The interference here is the interference between the base station and the base station. No matter whether the DL sending or UL reception is performed for the terminal in the RRC idle state, the RRC inactive state, or the RRC connected state, the interference exists. As illustrated in FIG. 13, gNB 2 (interfering base station) performs DL sending on a DL slot, and gNB 1 (interfered base station) performs UL reception on an UL subband, and the DL sending may interfere with the UL reception. For this reason, the CLI problem can be avoided by a solution implemented on the network side. For example, information such as the UL configuration and DL sending configuration may be interacted between the two base stations, so that the two base stations ensure that no UL reception is performed when performing DL sending. Alternatively, the interference is isolated in time and/or frequency by efficiently configuring the UL resources and DL resources.

Application Example 9

The terminal device in the RRC idle state and the RRC inactive state may implicitly identify whether the network side has the capacity of supporting cell-level SBFD by SBFD configuration (that is, the first configuration information in the above solutions) of the network side, or whether the network side has the capacity of supporting cell-level may be explicitly indicated. The SBFD configuration and explicit indication may be configured through a system broadcast message, such as a SIB.

The terminal devices in the RRC idle state and the RRC inactive state reports the capability of the terminal device only after the RRC connection is established and the AS is securely activated. Before the network side obtains the capability of the terminal device, many UL-DL signaling are interacted between the terminal device and the network side, and how to schedule these signaling, for example, whether the signaling is scheduled on the DL subband or the UL subband is determined based on the capability of the terminal device. The terminal device in the RRC idle state and the RRC inactive state may report its own capability to the network side by the following solutions.

In Solution 1, the terminal device with the SBFD capability may send an RACH on the RO resource in the UL subband to implicitly notify the network side that the terminal device has the capacity of supporting cell-level SBFD.

In Solution 2, in order to ensure the access delay, the terminal device may perform random access on the UL slot, and in this case, the network side cannot determine whether the terminal device has the capacity of supporting cell-level SBFD through the slot in which the RACH is located. For this case, whether the terminal device has the capacity of supporting cell-level SBFD may be determined through the preamble. For example, the network side configures a preamble group for the terminal device which has the capacity of supporting cell-level SBFD to initiate a random access procedure. The network side identifies the capability of the terminal device based on the received preamble.

In Solution 3, before the terminal device sends MSG3 (including MSG3), the network side does not schedule (such as scheduling MSG2 and MSG3) the terminal device on the subband. The terminal device may indicate that it has the capacity of supporting cell-level SBFD through MSG3. The capability may be implicitly indicated through CCCH LCID of MSG3 or explicitly indicated by information carried in MSG3. After acquiring the capability of the terminal device, the network side determines whether to perform scheduling on the subband according to the capability of the terminal device.

In Solution 4, the terminal device may indicate the capability of the terminal device to the network side by carrying an indication that the terminal device has the capacity of supporting cell-level SBFD in the MSG5. Before the terminal device sends the MSG5 (including the MSG5), the network side does not perform UL-DL scheduling for the terminal device on the subband. After acquiring the capability of the terminal device, the network side determine whether to perform scheduling on the subband according to the capability of the terminal device.

In the technical solutions of the embodiments of the present disclosure, a TDD cell supporting cell-level SBFD is defined, which increases the RACH capacity, reduce the RACH delay, reduce the delay for the SIB and paging, and improve paging capacity, so that the cell has more flexibility in high-frequency deployment.

The preferred embodiments of the present disclosure have been described in detail above with reference to the accompanying drawings, but the present disclosure is not limited to the specific details in the above embodiments. Within the scope of the technical concept of the present disclosure, various simple modifications may be made to the technical solutions of the present disclosure, and these simple modifications all fall within the scope of protection of the present disclosure. For example, various specific technical features described in the above specific embodiments may be combined in any suitable manner without contradiction, and various possible combinations will not be described separately in the present disclosure in order to avoid unnecessary repetition. For another example, various different embodiments of the present disclosure may be combined arbitrarily as long as the combination does not depart from the idea of the present disclosure, and the combination should also be regarded as the contents of the present disclosure. For another example, various embodiments and/or technical features of the various embodiments in the present disclosure may be combined with the related art in any manner without conflict, and the resulting technical solutions obtained after the combination shall also fall within the scope of protection of the present disclosure.

It should also be understood that in various method embodiments of the present disclosure, the sequence numbers of the processes do not mean an execution sequence, and the execution sequence of the processes should be determined by functions and an internal logic thereof, and should not form any limit to an implementation process of the embodiments of the present disclosure. Furthermore, in the embodiments of the present disclosure, the terms "downlink", "uplink" and "sidelink" indicate a direction of transmission of signals or data, "downlink" indicates that the signal or data is transmitted in a first direction from a station to UE of a cell, "uplink" indicates that the signal or data is transmitted in a second direction from UE of a cell to a station, and "sidelink" indicates that the signal or data is transmitted in a third direction from UE 1 to UE 2. For example, "downlink signal" indicates that the signal is transmitted in the first direction. Further, in the embodiments of the present disclosure, the term "and/or" is only an association relationship describing associated objects and represents that three relationships may exist. Specifically, A and/or B may represent three conditions: i.e., independent existence of A, existence of both A and B, and independent existence of B. In addition, character "/" in the present disclosure usually represents that previous and next associated objects form an "or" relationship.

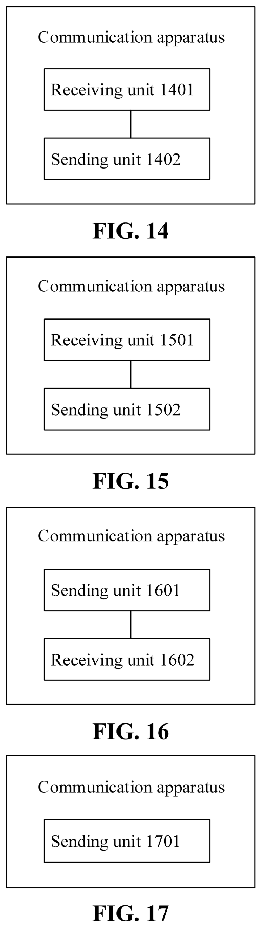

FIG. 14 is a schematic structural diagram of a composition of a communication apparatus according to an embodiment of the present disclosure. The communication apparatus is applied to a terminal device. As illustrated in FIG. 14, the communication apparatus includes a receiving unit 1401.

The receiving unit 1401 is configured to receive first configuration information sent by a network device. The first configuration information is used for configuring an UL subband and/or a DL subband for a TDD cell. The UL subband is used at least for transmission of a RACH, and the DL subband is used at least for transmission of a DL common signal and/or DL common information.

In some embodiments, the first configuration information is used for configuring the UL subband on a first partial slot and/or the DL subband on a second partial slot. The first partial slot includes a DL slot and/or a flexible slot, and the second partial slot includes an UL slot and/or a flexible slot.

In some embodiments, the first configuration information includes at least one of: the first information for configuring a frequency domain position of the UL subband; the second information for configuring a time domain position of the UL subband, or the third information for configuring a SCS of the UL subband.

In some embodiments, the UL subband is located within an initial UL BWP.

In some embodiments, the first configuration information is used for configuring an initial UL BWP in which the UL subband is configured. Alternatively, the first configuration information is used for configuring multiple initial UL BWPs in each of which the UL subband is configured.

In some embodiments, the first configuration information includes fourth information for configuring RO resources on UL resources. The UL resources include a resource corresponding to the UL subband and/or a resource corresponding to an UL slot.

In some embodiments, the RO resource configured on the resource corresponding to the UL subband and the RO resource configured on the resource corresponding to the UL slot are together mapped to SSB indexes in a specified order. Alternatively, the RO resource configured on the resource corresponding to the UL subband and the RO resource configured on the resource corresponding to the UL slot are respectively mapped to the SSB indexes in a specified order.

In some embodiments, the specified order is an order in frequency domain followed by time domain or an order in time domain followed by frequency domain.

In some embodiments, the fourth information includes a set of RACH configuration information. The set of RACH configuration information is used for uniformly configuring RO resources on the resource corresponding to the UL subband and the resource corresponding to the UL slot. Alternatively, the fourth information includes two sets of RACH configuration information. One set of RACH configuration information is used for configuring the RO resource on the resource corresponding to the UL subband, and other set of RACH configuration information is used for configuring the RO resource on the resource corresponding to the UL slot.

In some embodiments, the RACH configuration information includes RACH time domain resource configuration information, and the RACH time domain resource configuration information is used to configure at least one of: SFNs in which the RO resources are located, subframes in which the RO resources are located, slots in which the RO resources are located, starting symbols of the RO resources, or symbol lengths of the RO resources. The number of SFNs in which the RO resources are located is more than one.

In some embodiments, the SFNs in which the RO resources are located are determined according to a formula SFN mod x = y and a parameter n. Here, x represents an RO cycle, y represents an RO offset, and n represents that n consecutive SFNs starting from a SFN determined according to the formula are SFNs in which RO resources exist.

In some embodiments, the SFNs in which the RO resources are located are determined according to a formula SFN mod x = y. Here, x represents an RO cycle, y represents an RO offset, y has at least one configuration, and for each configuration of y, SFNs determined based on the formula are SFNs in which RO resources exist.

In some embodiments, the SFNs in which the RO resources are located are determined according to the formula SFN mod x = y and a parameter m. Here, x represents an RO cycle, y represents an RO offset, m represents an SFN obtained after the SFN determined based on the formula is offset by m SFNs is an SFN in which an RO resource exists, and m has at least one configuration.

In some embodiments, the apparatus further includes a sending unit 1402. The sending unit 1402 is configured to select a latest RO resource for sending the RACH based on the RO resources configured by the fourth information.

In some embodiments, in case that the first configuration information is used for configuring multiple initial UL BWPs, a RA-RNTI used in a random access procedure is determined based on an index of an initial UL BWP in which the RO resource used in the random access procedure is located; and/or, the RA-RNTI used in the random access procedure is determined based on a frequency domain index of the RO resource used in the random access procedure, and the frequency domain indexes of RO resources on the multiple initial UL BWPs are uniformly numbered; and/or, in the multiple initial UL BWPs, a slot of at most one initial UL BWP in the same slot is an UL slot, or at most one initial UL BWP in the same slot has an RO resource. Frequency domain indexes of RO resources on the multiple initial UL BWPs are uniformly numbered.

In some embodiments, the RACH supports a long sequence format.

In some embodiments, the first configuration information includes at least one of: the fifth information for configuring a frequency domain position of the DL subband; the sixth information for configuring a time domain position of the DL subband; or the seventh information for configuring a SCS of the DL subband.

In some embodiments, the DL subband is located within the first DL bandwidth, and the first DL bandwidth is a CSS#0 bandwidth and/or an initial DL BWP.

In some embodiments, the first configuration information is used for configuring the CSS#0 bandwidth in which the DL subband is configured, or the first configuration information is used for configuring multiple CSS#0 bandwidths in each of which the DL subband is configured.

In some embodiments, the first configuration information is used for configuring an initial DL BWP in which the DL subband is configured, or the first configuration information is used for configuring multiple initial DL BWPs in each of which the DL subband is configured.

In some embodiments, the first configuration information includes eighth information for configuring, in DL resources, a SS resource and/or a CORESET resource for the DL common signal and/or DL common information. The DL resources include a resource corresponding to the DL subband and/or a resource corresponding to a DL slot.

In some embodiments, the receiving unit 1401 is further configured to receive the DL common signal and/or DL common information based on the SS resource and/or the CORESET resource configured by the eighth information.

In some embodiments, the DL common signal and/or DL common information includes at least one of: a system broadcast message, a paging message, or a DL message in a random access procedure.

In some embodiments, if the DL common signal and/or DL common information are repeatedly transmitted, the DL common signal and/or DL common information are repeatedly transmitted by using a frequency hopping manner.

In some embodiments, in case that the first configuration information is used for configuring multiple initial UL BWPs and multiple initial DL BWPs, the first configuration information is further used for configuring an association relationship between the multiple initial UL BWPs and the multiple initial DL BWPs.

An initial UL BWP and an initial DL BWP that have the association relationship are used for UL sending and DL reception that have an association relationship, respectively.

In some embodiments, the UL sending is MSG1 sending and the DL reception is MSG2 reception; or the UL sending is MSG3 sending and the DL reception is MSG4 reception; or the UL sending is MSGA sending and the DL reception is MSGB reception.

In some embodiments, the first configuration information includes ninth information for configuring one or more CORESETs within the first DL bandwidth. The first DL bandwidth is a CSS # 0 bandwidth and/or an initial DL BWP.

In some embodiments, in case that the ninth information configures one CORESET, the CORESET and an SS associated with the CORESET are used to determine POs on DL resources. The DL resources include a resource corresponding to the DL subband and a resource corresponding to a DL slot.

In some embodiments, in case that the ninth information configures multiple CORESETs, different CORESETs are associated with same SS or different SSs. The multiple CORESETs include a first CORESET and a second CORESET.

The first CORESET and an SS associated with the first CORESET are used to determine a PO on the resource corresponding to the DL subband.

The second CORESET and an SS associated with the second CORESET are used to determine a PO on the resource corresponding to the DL slot.

In some embodiments, the PO on the resource corresponding to the DL slot and the PO on the resource corresponding to the DL subband are uniformly numbered.

In some embodiments, the PO on the resource corresponding to the DL slot and the PO on the resource corresponding to the DL subband are mapped to SSB indexes in a chronological order.

In some embodiments, the receiving unit 1401 is configured to monitor, on the Pos, a PDCCH which schedules the DL common signal and/or the DL common information.

In some embodiments, in the first configuration information, a time domain position corresponding to the DL common signal and/or DL common information does not overlap with a time domain position corresponding to a RO resource; and/or a frequency domain position corresponding to the DL common signal and/or DL common information and a frequency domain position corresponding to a RO resource satisfy a specified frequency domain interval.

In some embodiments, the terminal device does not send the RACH in a process of receiving the DL common signal and/or DL common information based on the first configuration information, or the terminal device does not receive the DL common signal and/or DL common information in a process of sending the RACH based on the first configuration information.

In some embodiments, the receiving unit 1401 is configured to acquire that the network device has a capability of supporting cell level SBFD, and/or the sending unit 1402 is configured to indicate to the network device that the terminal device has a capability of supporting cell level SBFD.

In some embodiments, the receiving unit 1401 is configured to determine, through the first configuration information, that the network device has the capability of supporting cell level SBFD, or receive the first indication information sent by the network device. The first indication information indicates that the network device has the capability of supporting cell level SBFD.

In some embodiments, the sending unit 1402 is configured to send a RACH on the UL subband, or send a preamble belonging to the first preamble group in the RACH, or send MSG 3, or send MSG 5, to indicate to the network device that the terminal device has the capability of supporting cell level SBFD. The first preamble group is a preamble group configured by the network device for a terminal device that has the capability of supporting cell level SBFD.

In some embodiments, the sending unit 1402 is configured to send MSG3, to indicate to the network device that the terminal device has the capability of supporting cell level SBFD through second indication information carried in MSG 3 or a LCID of a CCCH in which MSG3 is located.

In some embodiments, the sending unit 1402 is configured to send MSG5, to indicate to the network device that the terminal device has the capability of supporting cell level SBFD through third indication information carried in MSG 5.

Those skilled in the art should understand that the related description of the above-described communication apparatus according to the embodiment of the present disclosure may be understood with reference to the related description of the communication method according to the embodiment of the present disclosure.

FIG. 15 is the second schematic structural diagram of the composition of the communication apparatus according to an embodiment of the present disclosure. The communication apparatus is applied to a terminal device. As illustrated in FIG. 15, the communication apparatus includes a receiving unit 1501.

The receiving unit 1501 is configured to receive first configuration information sent by a network device. The first configuration information is used for configuring multiple UL BWPs and/or multiple first DL bandwidths. The first DL bandwidths include CSS#0 bandwidths and/or initial DL BWPs. Different initial UL BWPs are configured with independent UL-DL configurations and/or RO resources, and different first DL bandwidths are configured with independent UL-DL configurations and/or SSs.

In some embodiments, the apparatus further includes a sending unit 1502. The sending unit 1502 is configured to select a latest RO resource for sending a RACH based on the RO resources configured by the first configuration information.

In some embodiments, a RA-RNTI used in a random access procedure is determined based on an index of an initial UL BWP in which a RO resource used in the random access procedure is located, and/or the RA-RNTI used in the random access procedure is determined based on a frequency domain index of the RO resource used in the random access procedure, and the frequency domain indexes of RO resources on the multiple initial UL BWPs are uniformly numbered; and/or in the multiple initial UL BWPs, a slot of at most one initial UL BWP in a same slot is an UL slot, or at most one initial UL BWP in the same slot has an RO resource.

In some embodiments, the receiving unit 1501 is configured to receive a DL common signal and/or DL common information based on the SSs configured by the first configuration information.

In some embodiments, the DL common signal and/or DL common information includes at least one of: a system broadcast message, a paging message, or a DL message in a random access procedure.

In some embodiments, in case that the first configuration information is used for configuring the multiple initial UL BWPs and the multiple initial DL BWPs, the first configuration information is further used for configuring an association relationship between the multiple initial UL BWPs and the multiple initial DL BWPs.

An initial UL BWP and an initial DL BWP that have the association relationship are used for UL sending and DL reception that have an association relationship, respectively.

In some embodiments, the UL sending is MSG1 sending and the DL reception is MSG2 reception, or the UL sending is MSG3 sending and the DL reception is MSG4 reception, or the UL sending is MSGA sending and the DL reception is MSGB reception.

Those skilled in the art should understand that the related description of the above-described communication apparatus according to the embodiment of the present disclosure may be understood with reference to the related description of the communication method according to the embodiment of the present disclosure.

FIG. 16 is the third schematic structural diagram of the composition of the communication apparatus according to the embodiment of the present disclosure. The communication apparatus is applied to a network device. As illustrated in FIG. 16, the communication apparatus includes a sending unit 1601.

The sending unit 1601 is configured to send first configuration information to a terminal device. The first configuration information is used for configuring a UL subband and/or a DL subband for a TDD cell. The UL subband is used at least for transmission of a RACH, and the DL subband is used at least for transmission of a DL common signal and/or DL common information.

In some embodiments, the first configuration information is used for configuring the UL subband on a first partial slot and/or the DL subband on a second partial slot. The first partial slot includes a DL slot and/or a flexible slot, and the second partial slot includes an UL slot and/or a flexible slot.

In some embodiments, the first configuration information includes at least one of: first information for configuring a frequency domain position of the UL subband; second information for configuring a time domain position of the UL subband; or third information for configuring a SCS of the UL subband.

In some embodiments, the UL subband is located within an initial UL BWP.

In some embodiments, the first configuration information is used for configuring an initial UL BWP in which the UL subband is configured; or the first configuration information is used for configuring multiple initial UL BWPs in each of which the UL subband is configured.

In some embodiments, the first configuration information includes fourth information for configuring RO resources on UL resources. The UL resources include a resource corresponding to the UL subband and/or a resource corresponding to a UL slot.

In some embodiments, the RO resource configured on the resource corresponding to the UL subband and the RO resource configured on the resource corresponding to the UL slot are mapped together to SSB indexes in a specified order, or the RO resource configured on the resource corresponding to the UL subband and the RO resource configured on the resource corresponding to the UL slot are respectively mapped to the SSB indexes in a specified order.

In some embodiments, the specified order is an order in frequency domain followed by time domain or an order in time domain followed by frequency domain.

In some embodiments, the fourth information includes a set of RACH configuration information. The set of RACH configuration information is used for uniformly configuring RO resources on the resource corresponding to the UL subband and the resource corresponding to the UL slot. Alternatively, the fourth information includes two sets of RACH configuration information. One set of RACH configuration information is used for configuring the RO resource on the resource corresponding to the UL subband, and other set of RACH configuration information is used for configuring RO resource on the resource corresponding to the UL slot.

In some embodiments, the RACH configuration information includes RACH time domain resource configuration information. The RACH time domain resource configuration information is used to configure at least one of: SFNs in which the RO resources are located, subframes in which the RO resources are located, slots in which the RO resources are located, starting symbols of the RO resources, or symbol lengths of the RO resources. The number of SFNs in which the RO resources are located is more than one.

In some embodiments, the SFNs in which the RO resources are located are determined according to a formula $SFN \mod x = y$ and a parameter n. Here, x represents an RO cycle, y represents an RO offset, and n represents that n consecutive SFNs starting from a SFN determined according to the formula are SFNs in which RO resources exist.

In some embodiments, the SFNs in which the RO resources are located are determined according to a formula $SFN \mod x = y$. Here, x represents an RO cycle, y represents an RO offset, y has at least one configuration, and for each configuration of y, SFNs determined based on the formula are SFNs in which RO resources exist.

In some embodiments, the SFNs in which the RO resources are located are determined according to the formula $SFN \mod x = y$ and a parameter m. Here x represents an RO cycle, y represents an RO offset, m represents an SFN obtained after the SFN determined based on the formula is offset by m SFNs is an SFN in which an RO resource exists, and m has at least one configuration.

In some embodiments, in case that the first configuration information is used for configuring multiple initial UL BWPs, a RA-RNTI used in a random access procedure is determined based on an index of an initial UL BWP in which a RO resource used in the random access procedure is located; and/or the RA-RNTI used in the random access procedure is determined based on a frequency domain index of the RO resource used in the random access procedure, and the frequency domain indexes of RO resources on the multiple initial UL BWPs are uniformly numbered; and/or in the multiple initial UL BWPs, a slot of at most one initial UL BWP in a same slot is an UL slot, or at most one initial UL BWP in the same slot has an RO resource.

In some embodiments, the RACH supports a long sequence format.

In some embodiments, the first configuration information includes at least one of: fifth information for configuring a frequency domain position of the DL subband; sixth information for configuring a time domain position of the DL subband; or seventh information for configuring a SCS of the DL subband.

In some embodiments, the DL subband is located within the first DL bandwidth, and the first DL bandwidth is a CSS#0 bandwidth and/or an initial DL BWP.

In some embodiments, the first configuration information is used for configuring the CSS#0 bandwidth in which the DL subband is configured; or the first configuration information is used for configuring multiple CSS#0 bandwidths in each of which the DL subband is configured.

In some embodiments, the first configuration information is used for configuring an initial DL BWP in which the DL subband is configured, or the first configuration information is used for configuring multiple initial DL BWPs in each of which the DL subband is configured.

In some embodiments, the first configuration information includes eighth information for configuring, in DL resources, a SS resource and/or a CORESET resource for the DL common signal and/or DL common information. The DL resource includes a resource corresponding to the DL subband and/or a resource corresponding to a DL slot.

In some embodiments, the DL common signal and/or DL common information includes at least one of: a system broadcast message, a paging message, or a DL message in a random access procedure.

In some embodiments, if the DL common signal and/or DL common information are repeatedly transmitted, the DL common signal and/or DL common information are repeatedly transmitted by using a frequency hopping manner.

In some embodiments, in a case that the first configuration information is used for configuring multiple initial UL BWPs and multiple initial DL BWPs, the first configuration information is further used for configuring an association relationship between the multiple initial UL BWPs and the multiple initial DL BWPs.

An initial UL BWP and an initial DL BWP that have the association relationship are used for UL sending and DL reception that have an association relationship, respectively.

In some embodiments, the UL sending is MSG1 sending and the DL reception is MSG2 reception; or the UL sending is MSG3 sending and the DL reception is MSG4 reception; or the UL sending is MSGA sending and the DL reception is MSGB reception.

In some embodiments, the first configuration information includes ninth information for configuring one or more CORESETs within the first DL bandwidth. The first DL bandwidth is a CSS#0 bandwidth and/or an initial DL BWP.

In some embodiments, in a case that the ninth information configures one CORESET, the CORESET and an SS associated with the CORESET are used to determine POs on DL resources. The DL resources include a resource corresponding to the DL subband and a resource corresponding to the DL slot.

In some embodiments, in case that the ninth information configures multiple CORESETs, different CORESETs are associated with same SS or different SSs. The multiple CORESETs include a first CORESET and a second CORESET.

The first CORESET and an SS associated with the first CORESET are used to determine a PO on the resource corresponding to the DL subband.

The second CORESET and an SS associated with the second CORESET are used to determine a PO on the resource corresponding to the DL slot.

In some embodiments, the PO on the resource corresponding to the DL slot and the PO on the resource corresponding to the DL subband are uniformly numbered.

In some embodiments, the PO on the resource corresponding to the DL slot and the PO on the resource corresponding to the DL subband are mapped to SSB indexes in a chronological order.

In some embodiments, in the first configuration information, a time domain position corresponding to the DL common signal and/or DL common information does not overlap with a time domain position corresponding to a RO resource; and/or a frequency domain position corresponding to the DL common signal and/or DL common information and a frequency domain position corresponding to a RO resource satisfy a specified frequency domain interval.

In some embodiments, the sending unit 1601 is configured to indicate to the terminal device that the network device has a capability of supporting cell level SBFD, and/or the apparatus further includes a receiving unit 1602 configured to acquire that the terminal device has a capability of supporting cell level SBFD.

In some embodiments, the sending unit 1601 is configured to indicate through the first configuration information to the terminal device that the network device has the capability of supporting cell level SBFD; or send the first indication information to the terminal device, to indicate that the network device has the capability of supporting cell level SBFD.

In some embodiments, the receiving unit 1602 is configured to receive a RACH sent by the terminal device on the UL subband, to acquire that the terminal device has the capability of supporting cell level SBFD; or receive a preamble belonging to a first preamble group sent by the terminal device in the RACH, to acquire that the terminal device has the capability of supporting cell level SBFD; or receive MSG3 sent by the terminal device, to acquire that the terminal device has the capability of supporting cell level SBFD; or receive MSG 5 sent by the terminal device, to acquire that the terminal device has the capability of supporting cell level SBFD. The first preamble group is configured by the network device for a terminal device that has the capability of supporting cell level SBFD.

In some embodiments, the receiving unit 1602 is configured to receive MSG3 sent by the terminal device, to acquire that the terminal device has the capability of supporting cell level SBFD through second indication information carried in MSG3 or a LCID of a CCCH in which the MSG3 sent by the terminal device is located.

In some embodiments, the receiving unit 1602 is configured to receive MSG5, to acquire that the terminal device has the capability of supporting cell level SBFD through third indication information carried in the MSG 5.

In some embodiments, the network device is a first base station, and the sending unit 1601 is configured to send first negotiation information to a second base station and/or the receiving unit 1602 is configured to receive second negotiation information sent by the second base station. The first negotiation information is information related to an RO configured by the first base station, and the second negotiation information is information related to a DL common signal and/or DL common information on the second base station side.

The first negotiation information is used by the second base station to adjust the information related to the DL common signal and/or DL common information on the second base station side, and the second negotiation information is used by the first base station to adjust the information related to the RO configured by the first base station. At least one of following condition is satisfied after the information is adjusted: no DL common signal and/or DL common information is sent at a time domain position of the RO; the time domain position of the RO does not overlap with a time domain position of the DL common signal and/or DL common information; or a frequency domain position of the RO and a frequency domain position of the DL common signal and/or DL common information satisfy a specified frequency domain interval.

In some embodiments, the apparatus further includes a configuration unit. The configuration unit is configured to configure different preamble target received powers for a RO in the UL subband and a RO in an UL slot. A preamble target received power corresponding to the RO in the UL subband is less than a preamble target received power corresponding to the RO in the UL slot.

In some embodiments, the UL subband and the DL subband configured by the same network device satisfy a specified frequency domain interval; and/or the UL subband and the DL subband configured by different network devices satisfy a specified frequency domain interval.

Those skilled in the art should understand that the related description of the above-described communication apparatus according to the embodiment of the present disclosure may be understood with reference to the related description of the communication method according to the embodiment of the present disclosure.

FIG. 17 is the fourth schematic structural diagram of the composition of the communication apparatus according to an embodiment of the present disclosure. The communication apparatus is applied to a network device. As illustrated in FIG. 17, the communication apparatus includes a sending unit 1701.

The sending unit 1701 is configured to send first configuration information to a terminal device. The first configuration information is used for configuring multiple initial UL BWPs and/or multiple first DL bandwidths. The first DL bandwidths include CSS#0 bandwidths and/or initial DL BWPs. Different initial UL BWPs are configured with independent UL-DL configurations and/or RACH Occasion (RO) resources, and different first DL bandwidths are configured with independent UL-DL configurations and/or SSs.

In some embodiments, a RA-RNTI used in a random access procedure is determined based on an index of an initial UL BWP in which a RO resource used in the random access procedure is located; and/or the RA-RNTI used in the random access procedure is determined based on a frequency domain index of the RO resource used in the random access procedure, and the frequency domain indexes of RO resources on the multiple initial UL BWPs are uniformly numbered; and/or in the multiple initial UL BWPs, a slot of at most one initial UL BWP in a same slot is an UL slot, or at most one initial UL BWP in the same slot has an RO resource.

In some embodiments, in case that the first configuration information is used for configuring multiple initial UL BWPs and multiple initial DL BWPs, the first configuration information is further used for configuring an association relationship between the multiple initial UL BWPs and the multiple initial DL BWPs.

An initial UL BWP and an initial DL BWP that have the association relationship are used for UL sending and DL reception that have an association relationship, respectively.

In some embodiments, the UL sending is MSG1 sending and the DL reception is MSG2 reception; or the UL sending is MSG3 sending and the DL reception is MSG4 reception; or the UL sending is MSGA sending and the DL reception is MSGB reception.

Those skilled in the art should understand that the related description of the above-described communication apparatus according to the embodiment of the present disclosure may be understood with reference to the related description of the communication method according to the embodiment of the present disclosure.

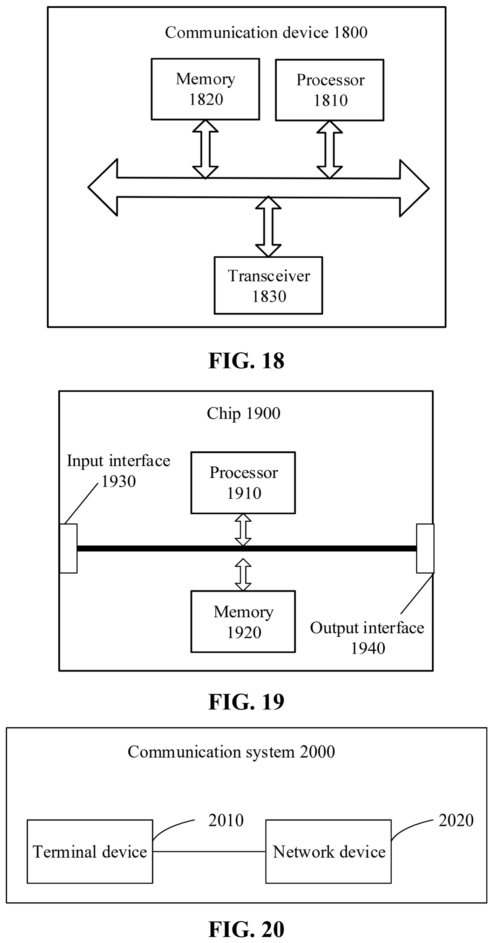

FIG. 18 is a schematic structural diagram of a communication device according to an embodiment of the present disclosure. The communication device 1800 may be a terminal device, or the network device. The communication device 1800 illustrated in FIG. 18 includes a processor 1810. The processor 1810 may be configured to invoke and execute a computer program from a memory to perform the method in the embodiments of the present disclosure.

Optionally, as illustrated in FIG. 18, the communication device may further include a memory 1820. The processor 1810 may be configured to invoke and execute the computer program from the memory 1820 to perform the method in the embodiments of the present disclosure.

The memory 1820 may be a separate device independent of the processor 1810 or may be integrated in the processor 1810.

Optionally, as illustrated in FIG. 18, the communication device 1800 may further include a transceiver 1830, and the processor 1810 may control the transceiver to communicate with other devices, in particular, sending information or data to or receiving information or data sent by other devices.

The transceiver 1830 may include a transmitter and a receiver. The transceiver 1830 may further include one or more antennas.

Optionally, the communication device 1800 may be specifically the network device according to the embodiments of the present disclosure. The communication device 1800 may implement corresponding processes implemented by the network device in each method according to the embodiments of the present disclosure, which will not be described herein for the sake of brevity.

Optionally, the communication device 1800 may be specifically the mobile terminal/terminal device according to the embodiments of the present disclosure. The communication device 1800 may implement corresponding processes implemented by the mobile terminal/terminal device in each method according to the embodiments of the present disclosure, which will not be described herein for the sake of brevity.

FIG. 19 is a schematic structural diagram of a chip according to an embodiment of the present disclosure. The chip 1900 illustrated in FIG. 19 includes a processor 1910. The processor 1910 is configured to invoke and execute a computer program from a memory to implement the method according to any embodiment of the present disclosure.

Optionally, as illustrated in FIG. 19, the chip 1900 may further include a memory 1920. The processor 1910 may invoke and execute a computer program from the memory 1920 to implement the methods in the embodiments of the present disclosure.

The memory 1920 may be a separate device independent of the processor 1910 or may be integrated in the processor 1910.

Optionally, the chip 1900 may further include an input interface 1930. The processor 1910 may control the input interface 1930 to communicate with other devices or chips. Specifically, the processor 1910 may control the input interface 1930 to acquire information or data sent by other devices or chips.

In some embodiments, the chip 1900 may further include an output interface 1940. The processor 1910 may control the output interface 1940 to communicate with other devices or chips. Specifically, the processor 1910 may control the out interface 1930 to output information or data to other devices or chips.

Optionally, the chip may be applied to the network device in the embodiments of the present disclosure, and the chip may implement corresponding processes implemented by the network device in each method of the embodiment of the present disclosure, which will not be described herein for the sake of brevity.

Optionally, the chip may be applied to the mobile terminal/terminal device in the embodiments of the present disclosure, and the chip may implement corresponding processes implemented by the mobile terminal/terminal device in each method of the embodiment of the present disclosure, which will not be described herein for the sake of brevity.

It should be understood that the chip mentioned in the embodiments of the present disclosure may be called a system level chip, a system chip, a chip system or a system-on-chip or the like.

FIG. 20 is a schematic block diagram of a communication system 2000 according to an embodiment of the present disclosure. As illustrated in FIG. 20, the communication system 2000 includes a terminal device 2010 and a network device 2020.

The terminal device 2010 may be configured to implement the corresponding functions implemented by the terminal device in the above methods, and the network device 2020 may be configured to implement the corresponding functions implemented by the network device in the above methods, which will not be described herein for the sake of brevity.

It is to be understood that the processor in the embodiments of the present disclosure may be an integrated circuit chip with a signal processing capability. During an implementation process, each operation in the above method embodiments may be completed via an integrated logic circuit of hardware in the processor or an instruction in a software form. The processor described above may be a universal processor, a Digital Signal Processor (DSP), an Application Specific Integrated Circuit (ASIC), a Field Programmable Gate Array (FPGA), a programmable logic device, a discrete gate or a transistor logic device, a discrete hardware component. Each method, operation and logic block diagram disclosed in the embodiments of the present disclosure may be implemented or executed. The universal processor may be a microprocessor or the processor may also be any conventional processor and the like. The operations of the methods disclosed in combination the embodiments of the present disclosure may be directly executed and completed by a hardware decoding processor or executed and completed by a combination of hardware and software modules in the decoding processor. The software module may be located in a mature storage medium in the art, such as a Random Access Memory (RAM), a flash memory, a Read-Only Memory (ROM), a Programmable ROM (PROM), an Electrically EPROM (EEPROM) or a register. The storage medium is located in the memory. The processor reads information from the memory and completes the operations of the foregoing methods in combination with the hardware of the processor.

It is to be understood that the memory in the embodiments of the present disclosure may be a volatile memory or a non-volatile memory, or may include both volatile and non-volatile memories. The non-volatile memory may be a ROM, a PROM, an Erasable PROM (EPROM), an Electrically EPROM (EEPROM), or a flash memory. The volatile memory may be a Random Access Memory (RAM) used as an external cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM) and a Direct Rambus RAM (DR RAM). It is to be noted that the memory of the system and method described in the present disclosure is intended to include, but not limited to, memories of these and any other proper types.

It is to be understood that the above memory is exemplarily but unlimitedly described. For example, the memory in the embodiments of the present disclosure may also be an SRAM, a DRAM, an SDRAM, a DDR SDRAM, an ESDRAM, an SLDRAM, a DR RAM, and the like. That is, the memory in the embodiments of the present disclosure is intended to include but not limited to memories of these and any other proper types.

The embodiments of the present disclosure also provide a computer readable storage medium for storing computer programs.

Optionally, the computer readable storage medium may be applied to the network devices in the embodiments of the present disclosure, and the computer program causes the computer to execute the corresponding processes implemented by the network devices in each method of the embodiment of the present disclosure, which will not be described herein for the sake of brevity.

Optionally, the computer readable storage medium may be applied to the mobile terminal/terminal device in the embodiments of the present disclosure, and the computer program causes the computer to execute the corresponding processes implemented by the mobile terminal/terminal device in each method of the embodiment of the present disclosure, which will not be described herein for the sake of brevity.

The embodiments of the present disclosure further provide a computer program product includes computer program instructions.

Optionally, the computer program product may be applied to the network device in the embodiments of the present disclosure, and the computer program instructions cause the computer to execute the corresponding processes implemented by the network devices in each method of the embodiment of the present disclosure, which will not be described herein for the sake of brevity.

Optionally, the computer program product may be applied to the mobile terminal/terminal device in the embodiments of the present disclosure, and the computer program instructions cause the computer to execute the corresponding processes implemented by the mobile terminal/terminal device in each method of the embodiment of the present disclosure, which will not be described herein for the sake of brevity.

The embodiments of the present disclosure further provide a computer program.

Optionally, the computer program may be applied to the network device in the embodiments of the present disclosure. When the computer program is executed on a computer, the computer executes the corresponding processes implemented by the network device in each method of the embodiment of the present disclosure, which will not be described herein for the sake of brevity.

Optionally, the computer program may be applied to the mobile terminal/terminal device in the embodiments of the present disclosure. When the computer program is executed on the computer, the computer program causes the computer to execute the corresponding processes implemented by the mobile terminal/terminal device in each method of the embodiment of the present disclosure, which will not be described herein for the sake of brevity.

Those of ordinary skill in the art may realize that the units and algorithm operations of each example described in combination with the embodiments disclosed in the present disclosure may be implemented by electronic hardware or a combination of computer software and the electronic hardware. Whether these functions are executed in a hardware or software manner depends on specific applications and design constraints of the technical solutions. The skilled person may realize the described functions for each specific application with different methods, but such realization shall fall within the scope of the present disclosure.

Those skilled in the art may clearly learn about that regarding specific working processes of the system, apparatus and unit described above, reference may be made to the corresponding processes in the method embodiments and will not be elaborated herein for convenient and brief description.

In some embodiments provided by the present disclosure, it is to be understood that the disclosed system, apparatus and method may be implemented in another manner. For example, the apparatus embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between displayed or discussed components may be indirect coupling or communication connection, implemented through some interfaces, devices or units, and may be electrical and mechanical or adopt other forms.

The units described as separate parts may or may not be physically separated, and parts displayed as units may or may not be physical units, and namely may be located in the same place, or may also be distributed to multiple network units. Part or all of the units may be selected according to a practical requirement, to achieve the purpose of the solutions of the embodiments.

In addition, functional units in each embodiment of the present disclosure may be integrated into a processing unit, each functional unit may also physically exist independently, and two or more than two functional units may also be integrated into a unit.

When being realized in form of software functional unit and sold or used as an independent product, the function may be stored in a computer readable storage medium. Based on such an understanding, the technical solutions of the present disclosure substantially or parts making contributions to the conventional art or part of the technical solutions may be embodied in form of software product, and the computer software product is stored in a storage medium, including multiple instructions configured to enable a computer device (which may be a personal computer, a server, a network device or the like) to execute all or part of the operations of the method in each embodiment of the present disclosure. The abovementioned storage medium includes a U disk, a mobile hard disk, a ROM, a RAM, a magnetic disk or an optical disk or various medium capable of storing program code.

Only the specific implementation of the present disclosure is described above, and not intended to limit the scope of protection of the present disclosure. Any variations or replacements easily conceived by those skilled in the art within the technical scope disclosed by the present disclosure shall fall within the scope of protection of the present disclosure. Therefore, the scope of protection of the present disclosure shall be subject to the scope of protection of the claims.

**Claims**

1. A communication method, comprising:
   receiving, by a terminal device, first configuration information sent by a network device, wherein the first configuration information is used for configuring an uplink (UL) subband and/or a downlink (DL) subband for a Time Division Duplexing (TDD) cell, the UL subband is used at least for transmission of a Random Access Channel (RACH), and the DL subband is used at least for transmission of a DL common signal and/or DL common information.

2. The method of claim 1, wherein the first configuration information is used for configuring the UL subband on a first partial slot and/or the DL subband on a second partial slot, the first partial slot comprises a DL slot and/or a flexible slot, and the second partial slot comprises an UL slot and/or a flexible slot.

3. The method of claim 1 or 2, wherein the first configuration information comprises at least one of:

first information for configuring a frequency domain position of the UL subband;
second information for configuring a time domain position of the UL subband; or
third information for configuring a Sub-Carrier Spacing (SCS) of the UL subband.

4. The method of any one of claims 1 to 3, wherein the UL subband is located within an initial UL Band Width Part (BWP).

5. The method of claim 4, wherein,

the first configuration information is used for configuring an initial UL BWP in which the UL subband is configured; or
the first configuration information is used for configuring a plurality of initial UL BWPs in each of which the UL subband is configured.

6. The method of any one of claims 1 to 5, wherein the first configuration information comprises:
fourth information for configuring RACH Occasion (RO) resources on UL resources, wherein the UL resources comprise a resource corresponding to the UL subband and/or a resource corresponding to an UL slot.

7. The method of claim 6, wherein,

the RO resource configured on the resource corresponding to the UL subband and the RO resource configured on the resource corresponding to the UL slot are together mapped to Synchronization Signal Block (SSB) indexes in a specified order; or
the RO resource configured on the resource corresponding to the UL subband and the RO resource configured on the resource corresponding to the UL slot are respectively mapped to the SSB indexes in a specified order.

8. The method of claim 7, wherein the specified order is an order in frequency domain followed by time domain or an order in time domain followed by frequency domain.

9. The method of any one of claims 6 to 8, wherein,

the fourth information comprises a set of RACH configuration information, and the set of RACH configuration information is used for uniformly configuring the RO resources on the resource corresponding to the UL subband and the resource corresponding to the UL slot; or
the fourth information comprises two sets of RACH configuration information, wherein one set of RACH configuration information is used for configuring the RO resource on the resource corresponding to the UL subband, and other set of RACH configuration information is used for configuring the RO resource on the resource corresponding to the UL slot.

10. The method of claim 9, wherein the RACH configuration information comprises RACH time domain resource configuration information, and the RACH time domain resource configuration information is used to configure at least one of: System Frame Numbers (SFNs) in which the RO resources are located, subframes in which the RO resources are located, slots in which the RO resources are located, starting symbols of the RO resources, or symbol lengths of the RO resources, wherein a number of SFNs in which the RO resources is more than one.

11. The method of claim 10, wherein the SFNs in which the RO resources are located are determined according to a formula SFN mod x = y and a parameter n, wherein x represents an RO cycle, y represents an RO offset, and n represents that n consecutive SFNs starting from a SFN determined according to the formula are SFNs in which the RO resources exist.

12. The method of claim 10, wherein the SFNs in which the RO resources are located are determined according to a formula SFN mod x = y, wherein x represents an RO cycle, y represents an RO offset, y has at least one configuration, and for each configuration of y, SFNs determined according to the formula are SFNs in which the RO resources exist.

13. The method of claim 10, wherein the SFNs in which the RO resources are located are determined according to the formula SFN mod x = y and a parameter m, wherein x represents an RO cycle, y represents an RO offset, m represents an SFN obtained after the SFN determined according to the formula is offset by m SFNs is an SFN in which the RO resource exists, and m has at least one configuration.

14. The method of any one of claims 6 to 13, further comprising:
selecting, by the terminal device based on the RO resources configured by the fourth information, a latest RO resource for sending the RACH.

15. The method of any one of claims 6 to 14, wherein the first configuration information is used for configuring a plurality of initial UL BWPs,

a Random Access Radio Network Temporary Identifier (RA-RNTI) used in a random access procedure is determined based on an index of an initial UL BWP in which the RO resource used in the random access procedure is located; and/or
the RA-RNTI used in the random access procedure is determined based on a frequency domain index of the RO resource used in the random access procedure, wherein frequency domain indexes of RO resources on the plurality of initial UL BWPs are uniformly numbered; and/or
in the plurality of initial UL BWPs, a slot of at most one initial UL BWP in a same slot is an UL slot, or at most one initial UL BWP in the same slot has the RO resource.

16. The method of any one of claims 1 to 15, wherein the RACH supports a long sequence format.

17. The method of any one of claims 1 to 16, wherein the first configuration information comprises at least one of:

fifth information for configuring a frequency domain position of the DL subband;
sixth information for configuring a time domain position of the DL subband; or
seventh information for configuring a Sub-Carrier Spacing (SCS) of the DL subband.

18. The method of any one of claims 1 to 17, wherein the DL subband is located within a first DL bandwidth, and the first DL bandwidth is a CSS#0 bandwidth and/or an initial DL BWP.

19. The method of claim 18, wherein,

the first configuration information is used for configuring the CSS#0 bandwidth in which the DL subband is configured; or
the first configuration information is used for configuring a plurality of CSS#0 bandwidths in each of which the DL subband is configured.

20. The method of claim 18, wherein,

the first configuration information is used for configuring an initial DL BWP in which the DL subband is configured; or
the first configuration information is used for configuring a plurality of initial DL BWPs in each of which the DL subband is configured.

21. The method of any one of claims 1 to 20, wherein the first configuration information comprises:
eighth information for configuring a Search Space (SS) resource and/or a Control Resource Set (CORESET) resource for the DL common signal and/or DL common information in DL resources, wherein the DL resources comprise a resource corresponding to the DL subband and/or a resource corresponding to a DL slot.

22. The method of claim 21, further comprising:
receiving, by the terminal device, the DL common signal and/or DL common information based on the SS resource and/or the CORESET resource configured by the eighth information.

23. The method of any one of claims 1 to 22, wherein the DL common signal and/or DL common information comprises at least one of: a system broadcast message, a paging message, or a DL message in a random access procedure.

24. The method of any one of claims 1 to 23, wherein if the DL common signal and/or DL common information are repeatedly transmitted, the DL common signal and/or DL common information are repeatedly transmitted by using a frequency hopping manner.

25. The method of any one of claims 1 to 24, wherein in a case that the first configuration information is used for configuring a plurality of initial UL BWPs and a plurality of initial DL BWPs, the first configuration information is further used for configuring an association relationship between the plurality of initial UL BWPs and the plurality of initial DL BWPs, wherein the initial UL BWP and the initial DL BWP that have the association relationship are used for UL sending and DL reception that have an association relationship, respectively.

26. The method of claim 25, wherein

the UL sending is MSG1 sending and the DL reception is MSG2 reception; or
the UL sending is MSG3 sending and the DL reception is MSG4 reception; or
the UL sending is MSGA sending and the DL reception is MSGB reception.

27. The method of any one of claims 1 to 26, wherein the first configuration information comprises:
ninth information for configuring one or more CORESETs within a first DL bandwidth, wherein the first DL bandwidth is a CSS#0 bandwidth and/or an initial DL BWP.

28. The method of claim 28, wherein in case that the ninth information configures one CORESET, the CORESET and an SS associated with the CORESET are used to determine Physical Downlink Control Channel (PDCCH) occasions (POs) on DL resources, and the DL resources comprise a resource corresponding to the DL subband and a resource corresponding to a DL slot.

29. The method of claim 28, wherein in case that the ninth information configures a plurality of CORESETs, different CORESETs are associated with a same SS or different SSs, and the plurality of CORESETs comprise a first CORESET and a second CORESET,

wherein the first CORESET and an SS associated with the first CORESET are used to determine a PO on the resource corresponding to the DL subband; and
the second CORESET and an SS associated with the second CORESET are used to determine a PO on the resource corresponding to the DL slot.

30. The method according to claim 28 or 29, wherein the PO on the resource corresponding to the DL slot and the PO on the resource corresponding to the DL subband are uniformly numbered.

31. The method of any one of claims 28 to 30, wherein the PO on the resource corresponding to the DL slot and the PO on the resource corresponding to the DL subband are mapped to SSB indexes in a chronological order.

32. The method of any one of claims 28 to 31, further comprising:
monitoring, by the terminal device on the POs, a PDCCH which schedules the DL common signal and/or the DL common information.

33. The method of any one of claims 1 to 32, wherein in the first configuration information,

a time domain position corresponding to the DL common signal and/or DL common information does not overlap with a time domain position corresponding to a RO resource; and/or
a frequency domain position corresponding to the DL common signal and/or DL common information and a frequency domain position corresponding to a RO resource satisfy a specified frequency domain interval.

34. The method of any one of claims 1 to 33, further comprising:

not sending, by the terminal device, the RACH in a process of receiving the DL common signal and/or DL common information based on the first configuration information; or

not receiving, by the terminal device, the DL common signal and/or DL common information in a process of sending the RACH based on the first configuration information.

35. The method of any one of claims 1 to 34, further comprising:

acquiring, by the terminal device, that the network device has a capability of supporting cell level Subband non-overlapping Full Duplex (SBFD); and/or
indicating, by the terminal device to the network device, that the terminal device has a capability of supporting cell level SBFD.

36. The method of claim 35, wherein the acquiring, by the terminal device, that the network device has a capability of supporting cell level SBFD comprises:

determining, by the terminal device through the first configuration information, that the network device has the capability of supporting cell level SBFD; or
receiving, by the terminal device, first indication information sent by the network device, wherein the first indication information indicates that the network device has the capability of supporting cell level SBFD.

37. The method of claim 35, wherein the indicating, by the terminal device to the network device, that the terminal device has the capability of supporting cell level SBFD comprises:

indicating, by the terminal device to the network device by sending an RACH on the UL subband, that the terminal device has the capability of supporting cell level SBFD; or
indicating, by the terminal device to the network device through sending a preamble belonging to a first preamble group in the RACH, that the terminal device has the capability of supporting cell level SBFD, wherein the first preamble group is configured by the network device for a terminal device that has the capability of supporting cell level SBFD; or
indicating, by the terminal device to the network device through MSG 3, that the terminal device has the capability of supporting cell level SBFD; or
indicating, by the terminal device to the network device through MSG5, that the terminal device has the capability of supporting cell level SBFD.

38. The method of claim 37, wherein the indicating, by the terminal device to the network device through MSG3, that the terminal device has the capability of supporting cell level SBFD comprises:

indicating, by the terminal device to the network device through second indication information carried in the MSG 3, that the terminal device has the capability of supporting cell level SBFD; or
indicating, by the terminal device to the network device through a Locale Identifier (LCID) of a Common Control Channel (CCCH) in which the MSG3 is located, the capability that the terminal device has the capability of supporting cell level SBFD.

39. The method of claim 37, wherein the indicating, by the terminal device to the network device through the MSG5, that the terminal device has the capability of supporting cell level SBFD comprises:
indicating, by the terminal device to the network device through third indication information carried in the MSG 5, that the terminal device has the capability of supporting cell level SBFD.

40. A communication method, comprising:
receiving, by a terminal device, first configuration information sent by a network device, wherein the first configuration information is used for configuring a plurality of initial uplink (UL) Band Width Parts (BWPs) and/or a plurality of first downlink (DL) bandwidths, and the first DL bandwidths are CSS#0 bandwidths and/or initial DL BWPs, wherein different initial UL BWPs are configured with independent UL-DL configurations and/or RACH Occasion (RO) resources, and different first DL bandwidths are configured with independent UL-DL configurations and/or Search Spaces (SSs).

41. The method of claim 40, further comprising:
selecting, by the terminal device based on the RO resources configured by the first configuration information, a latest RO resource for sending a Random Access Channel (RACH).

**42.** The method of claim 40 or 41, wherein,

a Random Access Radio Network Temporary Identifier (RA-RNTI) used in a random access procedure is determined based on an index of an initial UL BWP in which the RO resource used in the random access procedure is located; and/or
the RA-RNTI used in the random access procedure is determined based on a frequency domain index of the RO resource used in the random access procedure, wherein frequency domain indexes of the RO resources on the plurality of initial UL BWPs are uniformly numbered; and/or
in the plurality of initial UL BWPs, a slot of at most one initial UL BWP in a same slot is an UL slot, or at most one initial UL BWP in a same slot has an RO resource.

**43.** The method of any one of claims 40 to 42, further comprising:
receiving, by the device, a DL common signal and/or DL common information based on the SSs configured by the first configuration information.

**44.** The method of claim 43, wherein the DL common signal and/or DL common information comprises at least one of: a system broadcast message, a paging message, or a DL message in a random access procedure.

**45.** The method of any one of claims 40 to 44, wherein in case that the first configuration information is used for configuring the plurality of initial UL BWPs and the plurality of initial DL BWPs, the first configuration information is further used for configuring an association relationship between the plurality of initial UL BWPs and the plurality of initial DL BWPs, wherein the initial UL BWP and the initial DL BWP that have the association relationship are used for UL sending and DL reception that have an association relationship, respectively.

**46.** The method of claim 45, wherein

the UL sending is MSG1 sending, and the DL reception is MSG2 reception; or
the UL sending is MSG3 sending, and the DL reception is MSG4 reception; or
the UL sending is MSGA sending, and the DL reception is MSGB reception.

**47.** A communication method, comprising:
sending, by a network device, first configuration information to a terminal device, wherein the first configuration information is used for configuring an uplink (UL) subband and/or a downlink (DL) subband for a Time Division Duplexing (TDD) cell, the UL subband is used at least for transmission of a Random Access Channel (RACH), and the DL subband is used at least for transmission of a DL common signal and/or DL common information.

**48.** The method of claim 47, wherein the first configuration information is used for configuring the UL subband on a first partial slot and/or the DL subband on a second partial slot, the first partial slot comprises a DL slot and/or a flexible slot, and the second partial slot comprises an UL slot and/or a flexible slot.

**49.** The method of claim 47 or 48, wherein the first configuration information comprises at least one of:

first information for configuring a frequency domain position of the UL subband;
second information for configuring a time domain position of the UL subband; or
third information for configuring a Sub-Carrier Spacing (SCS) of the UL subband.

**50.** The method of any one of claims 47 to 49, wherein the UL subband is located within an initial UL Band Width Part (BWP).

**51.** The method of claim 50, wherein,

the first configuration information is used for configuring an initial UL BWP in which the UL subband is configured; or
the first configuration information is used for configuring a plurality of initial UL BWPs in each of which the UL subband is configured.

**52.** The method of any one of claims 47 to 51, wherein the first configuration information comprises:
fourth information for configuring RACH Occasion (RO) resources on UL resources, wherein the UL resources comprise a resource corresponding to the UL subband and/or a resource corresponding to a UL slot.

53. The method of claim 52, wherein,

the RO resource configured on the resource corresponding to the UL subband and the RO resource configured on the resource corresponding to the UL slot are together mapped to Synchronization Signal Block (SSB) indexes in a specified order; or
the RO resource configured on the resource corresponding to the UL subband and the RO resource configured on the resource corresponding to the UL slot are respectively mapped to the SSB indexes in a specified order.

54. The method of claim 53, wherein the specified order is an order in frequency domain followed by time domain or an order in time domain followed by frequency domain.

55. The method of any one of claims 52 to 54, wherein,

the fourth information comprises a set of RACH configuration information, and the set of RACH configuration information is used for uniformly configuring the RO resources on the resource corresponding to the UL subband and the resource corresponding to the UL slot; or
the fourth information comprises two sets of RACH configuration information, wherein one set of RACH configuration information is used for configuring the RO resource on the resource corresponding to the UL subband, and other set of RACH configuration information is used for configuring the RO resource on the resource corresponding to the UL slot.

56. The method of claim 55, wherein the RACH configuration information comprises RACH time domain resource configuration information, and the RACH time domain resource configuration information is used to configure at least one of: System Frame Numbers (SFNs) in which the RO resources are located, subframes in which the RO resources are located, slots in which the RO resources are located, starting symbols of the RO resources, or symbol lengths of the RO resources, wherein a number of SFNs in which the RO resources are located is more than one.

57. The method of claim 56, wherein the SFNs in which the RO resources are located are determined according to a formula SFN mod x = y and a parameter n, wherein x represents an RO cycle, y represents an RO offset, and n represents that n consecutive SFNs starting from a SFN determined according to the formula are SFNs in which the RO resources exist.

58. The method of claim 56, wherein the SFNs in which the RO resources are located are determined according to a formula SFN mod x = y, wherein x represents an RO cycle, y represents an RO offset, y has at least one configuration, and for each configuration of y, SFNs determined according to the formula are SFNs in which the RO resources exist.

59. The method of claim 56, wherein the SFNs in which the RO resources are located are determined according to the formula SFN mod x = y and a parameter m, wherein x represents an RO cycle, y represents an RO offset, m represents an SFN obtained after the SFN determined according to the formula is offset by m SFNs is an SFN in which the RO resource exists, and m has at least one configuration.

60. The method of any one of claims 52 to 59, wherein the first configuration information is used for configuring a plurality of initial UL BWPs,

a Random Access Radio Network Temporary Identifier (RA-RNTI) used in a random access procedure is determined based on an index of an initial UL BWP in which the RO resource used in the random access procedure is located; and/or
the RA-RNTI used in the random access procedure is determined based on a frequency domain index of the RO resource used in the random access procedure, wherein frequency domain indexes of the RO resources on the plurality of initial UL BWPs are uniformly numbered; and/or
in the plurality of initial UL BWPs, a slot of at most one initial UL BWP in a same slot is an UL slot, or at most one initial UL BWP in the same slot has the RO resource.

61. The method of any one of claims 47 to 60, wherein the RACH supports a long sequence format.

62. The method of any one of claims 47 to 61, wherein the first configuration information comprises at least one of:

fifth information for configuring a frequency domain position of the DL subband;
sixth information for configuring a time domain position of the DL subband; or
seventh information for configuring a Sub-Carrier Spacing (SCS)of the DL subband.

63. The method of any one of claims 47 to 62, wherein the DL subband is located within a first DL bandwidth, and the first DL bandwidth is a CSS#0 bandwidth and/or an initial DL BWP.

64. The method of claim 63, wherein,

the first configuration information is used for configuring the CSS#0 bandwidth in which the DL subband is configured; or
the first configuration information is used for configuring a plurality of CSS#0 bandwidths in each of which the DL subband is configured.

65. The method of claim 63, wherein,

the first configuration information is used for configuring an initial DL BWP in which the DL subband is configured; or
the first configuration information is used for configuring a plurality of initial DL BWPs in each of which the DL subband is configured.

66. The method of any one of claims 47 to 65, wherein the first configuration information comprises:
eighth information for configuring a Search Space (SS) resource and/or a Control Resource Set (CORESET) resource for the DL common signal and/or DL common information in DL resources, wherein the DL resource comprises a resource corresponding to the DL subband and/or a resource corresponding to a DL slot.

67. The method of any one of claims 47 to 66, wherein the DL common signal and/or DL common information comprises at least one of: a system broadcast message, a paging message, or a DL message in a random access procedure.

68. The method of any one of claims 47 to 67, wherein if the DL common signal and/or DL common information are repeatedly transmitted, the DL common signal and/or DL common information are repeatedly transmitted by using a frequency hopping manner.

69. The method of any one of claims 47 to 68, wherein in case that the first configuration information is used for configuring a plurality of initial UL BWPs and a plurality of initial DL BWPs, the first configuration information is further used for configuring an association relationship between the plurality of initial UL BWPs and the plurality of initial DL BWPs, wherein the initial UL BWP and the initial DL BWP that have the association relationship are used for UL sending and DL reception that have an association relationship, respectively.

70. The method of claim 69, wherein,

the UL sending is MSG1 sending and the DL reception is MSG2 reception; or
the UL sending is MSG3 sending and the DL reception is MSG4 reception; or
the UL sending is MSGA sending and the DL reception is MSGB reception.

71. The method of any one of claims 47 to 70, wherein the first configuration information comprises:
ninth information for configuring one or more CORESETs within a first DL bandwidth, wherein the first DL bandwidth is a CSS#0 bandwidth and/or an initial DL BWP.

72. The method of claim 71, wherein in case that the ninth information configures one CORESET, the CORESET and an SS associated with the CORESET are used to determine Physical Downlink Control Channel (PDCCH) occasions (POs) on DL resources, and the DL resources comprise a resource corresponding to the DL subband and a resource corresponding to the DL slot.

73. The method of claim 71, wherein in a case that the ninth information configures a plurality of CORESETs, different CORESETs are associated with a same SS or different SSs, and the plurality of CORESETs comprise a first CORESET and a second CORESET,

wherein the first CORESET and an SS associated with the first CORESET are used to determine a PO on the resource corresponding to the DL subband; and

the second CORESET and an SS associated with the second CORESET are used to determine a PO on the resource corresponding to the DL slot.

74. The method according to claim 72 or 73, wherein the PO on the resource corresponding to the DL slot and the PO on the resource corresponding to the DL subband are uniformly numbered.

75. The method of any one of claims 72 to 74, wherein the PO on the resource corresponding to the DL slot and the PO on the resource corresponding to the DL subband are mapped to SSB indexes in a chronological order.

76. The method of any one of claims 47 to 75, wherein in the first configuration information,

a time domain position corresponding to the DL common signal and/or DL common information does not overlap with a time domain position corresponding to a RO resource; and/or

a frequency domain position corresponding to the DL common signal and/or DL common information and a frequency domain position corresponding to a RO resource satisfy a specified frequency domain interval.

77. The method of any one of claims 47 to 76, further comprising:

indicating, by the network device to the terminal device, that the network device has a capability of supporting cell level Subband non-overlapping Full Duplex (SBFD); and/or

acquiring, by the network device, that the terminal device has a capability of supporting cell level SBFD.

78. The method of claim 77, wherein the indicating, by the network device to the terminal device, that the network device has a capability of supporting cell level SBFD comprises:

indicating, by the network device to the terminal device through the first configuration information, that the network device has the capability of supporting cell level SBFD; or

sending, by the network device, first indication information to the terminal device, wherein the first indication information indicates that the network device has the capability of supporting cell level SBFD.

79. The method of claim 77, wherein the acquiring, by the network device, that the terminal device has a capability of supporting cell level SBFD comprises:

acquiring, by the network device through a RACH sent by the terminal device on the UL subband, that the terminal device has the capability of supporting cell level SBFD; or

acquiring, by the network device through a preamble belonging to a first preamble group sent by the terminal device in the RACH, that the terminal device has the capability of supporting cell level SBFD, wherein the first preamble group is configured by the network device for a terminal device that has the capability of supporting cell level SBFD; or

acquiring, by the network device through MSG3 sent by the terminal device, that the terminal device has the capability of supporting cell level SBFD; or

acquiring, by the network device through MSG 5 sent by the terminal device, that the terminal device has the capability of supporting cell level SBFD.

80. The method of claim 79, wherein the acquiring, by the network device through MSG3 sent by the terminal device, that the terminal device has the capability of supporting cell level SBFD comprises:

acquiring, by the network device through second indication information carried in the MSG3 sent by the terminal device, that the terminal device has the capability of supporting cell level SBFD; or

acquiring, by the network device through a Locale Identifier (LCID) of a Common Control Channel (CCCH) in which the MSG3 sent by the terminal device is located, that the terminal device has the capability of supporting cell level SBFD.

81. The method of claim 79, wherein the acquiring, by the network device through MSG 5 sent by the terminal device, that the terminal device has the capability of supporting cell level SBFD comprises:
acquiring, by the network device through third indication information carried in the MSG 5 sent by the terminal device, that the terminal device has the capability of supporting cell level SBFD.

82. The method of any one of claims 47 to 81, wherein the network device is a first base station, and the method further comprises:

sending, by the first base station, first negotiation information to a second base station and/or receiving, by the first base station, second negotiation information sent by the second base station, wherein the first negotiation information is information, related to an RO, configured by the first base station, and the second negotiation information is information, related to a DL common signal and/or DL common information, on the second base station side,
wherein the first negotiation information is used by the second base station to adjust the information, related to the DL common signal and/or DL common information, on the second base station side, and the second negotiation information is used by the first base station to adjust the information, related to the RO, configured by the first base station, and at least one of following conditions is satisfied after the information is adjusted:

no DL common signal and/or DL common information is sent at a time domain position of the RO;
the time domain position of the RO does not overlap with a time domain position of the DL common signal and/or DL common information; or
a frequency domain position of the RO and a frequency domain position of the DL common signal and/or DL common information satisfy a specified frequency domain interval.

83. The method of any one of claims 47 to 82, further comprising:
configuring, by the network device, different preamble target received powers for a RO in the UL subband and a RO in an UL slot, wherein a preamble target received power corresponding to the RO in the UL subband is less than a preamble target received power corresponding to the RO in the UL slot.

84. The method of any one of claims 47 to 83, wherein,

the UL subband and the DL subband configured by a same network device satisfy a specified frequency domain interval; and/or
the UL subband and the DL subband configured by different network devices satisfy a specified frequency domain interval.

85. A communication method, comprising:
sending, by a network device, first configuration information to a terminal device, wherein the first configuration information is used for configuring a plurality of initial uplink (UL) Band Width Parts (BWPs) and/or a plurality of first downlink (DL) bandwidths, and the first DL bandwidths are CSS#0 bandwidths and/or initial DL BWPs, wherein different initial UL BWPs are configured with independent UL-DL configurations and/or RACH Occasion (RO) resources, and different first DL bandwidths are configured with independent UL-DL configurations and/or Search Spaces (SSs).

86. The method of claim 85, wherein,

a Random Access Radio Network Temporary Identifier (RA-RNTI) used in a random access procedure is determined based on an index of an initial UL BWP in which the RO resource used in the random access procedure is located; and/or
the RA-RNTI used in the random access procedure is determined based on a frequency domain index of the RO resource used in the random access procedure, wherein the frequency domain indexes of the RO resources on the plurality of initial UL BWPs are uniformly numbered; and/or
in the plurality of initial UL BWPs, a slot of at most one initial UL BWP in a same slot is an UL slot, or at most one initial UL BWP in a same slot has an RO resource.

87. The method of claim 85 or 86, wherein in a case that the first configuration information is used for configuring the plurality of initial UL BWPs and the plurality of initial DL BWPs, the first configuration information is further used for configuring an association relationship between the plurality of initial UL BWPs and the plurality of initial DL BWPs, wherein the initial UL BWP and the initial DL BWP that have the association relationship are used for UL sending and DL reception that have an association relationship, respectively.

**88.** The method of claim 87, wherein,

the UL sending is MSG1 sending and the DL reception is MSG2 reception; or
the UL sending is MSG3 sending and the DL reception is MSG4 reception; or
the UL sending is MSGA sending and the DL reception is MSGB reception.

**89.** A communication apparatus, applied to a terminal device, comprising:
a receiving unit, configured to receive first configuration information sent by a network device, wherein the first configuration information is used for configuring an uplink (UL) subband and/or a downlink (DL) subband for a Time Division Duplexing (TDD) cell, the UL subband is used at least for transmission of a Random Access Channel (RACH), and the DL subband is used at least for transmission of a DL common signal and/or DL common information.

**90.** A communication apparatus, applied to a terminal device, comprising:
a receiving unit, configured to receive first configuration information sent by a network device, wherein the first configuration information is used for configuring a plurality of initial uplink (UL) Band Width Parts (BWPs) and/or a plurality of first downlink (DL) bandwidths, and the first DL bandwidths are CSS#0 bandwidths and/or initial DL BWPs, wherein different initial UL BWPs are configured with independent UL-DL configurations and/or RACH Occasion (RO) resources, and different first DL bandwidths are configured with independent UL-DL configurations and/or Search Spaces (SSs).

**91.** A communication apparatus, applied to a network device, comprising:
a sending unit, configured to send first configuration information to a terminal device, wherein the first configuration information is used for configuring an uplink (UL) subband and/or a downlink (DL) subband for a Time Division Duplexing (TDD) cell, the UL subband is used at least for transmission of a Random Access Channel (RACH), and the DL subband is used at least for transmission of a DL common signal and/or DL common information.

**92.** A communication apparatus, applied to a network device, comprising:
a sending unit, configured to send first configuration information to a terminal device, wherein the first configuration information is used for configuring a plurality of initial uplink (UL) Band Width Parts (BWPs) and/or a plurality of first downlink (DL) bandwidths, and the first DL bandwidths are CSS#0 bandwidths and/or initial DL BWPs, wherein different initial UL BWPs are configured with independent UL-DL configurations and/or RACH Occasion (RO) resources, and different first DL bandwidths are configured with independent UL-DL configurations and/or Search Spaces (SSs).

**93.** A terminal device comprising a processor and a memory, wherein the memory is configured to store a computer program, and the processor is configured to invoke and execute the computer program stored in the memory to cause the terminal device to perform the method of any one of claims 1 to 39 or the method of any one of claims 40 to 46.

**94.** A network device comprising a processor and a memory, wherein the memory is configured to store a computer program, and the processor is configured to invoke and execute the computer program stored in the memory to cause the network device to perform the method of any one of claims 47 to 84 or the method of any one of claims 85 to 88.

**95.** A chip comprising a processor, wherein the processor is configured to invoke and execute a computer program from a memory to cause a device on which the chip is mounted to perform the method of any one of claims 1 to 39, or the method of any one of claims 40 to 46, or the method of any one of claims 47 to 84, or the method of any one of claims 85 to 88.

**96.** A computer readable storage medium for storing a computer program that causes a computer to perform the method of any one of claims 1 to 39, or the method of any one of claims 40 to 46, or the method of any one of claims 47 to 84, or the method of any one of claims 85 to 88.

**97.** A computer program product comprising computer program instructions that cause a computer to perform the method of any one of claims 1 to 39, or the method of any one of claims 40 to 46, or the method of any one of claims 47 to 84, or the method of any one of claims 85 to 88.

**98.** A computer program causing a computer to perform the method of any one of claims 1 to 39, or the method of any one of claims 40 to 46, or the method of any one of claims 47 to 84, or the method of any one of claims 85 to 88.

**FIG. 1**

**FIG. 2**

EP 4 654 647 A1

**FIG. 3**

| The network device sends first configuration information to the terminal device, and the terminal device receives the first configuration information sent by the network device. The first configuration information is used for configuring an UL subband and/or a DL subband for a TDD cell. The UL subband is used at least for transmission of a RACH, and the DL subband is used at least for transmission of a DL common signal and/or DL common information | 401 |
|---|---|

**FIG. 4**

| The network device sends first configuration information to the terminal device, and the terminal device receives the first configuration information sent by the network device. The first configuration information is used for configuring multiple initial UL BWPs and/or multiple first DL bandwidths, and the first DL bandwidths are CSS#0 bandwidths and/or initial DL BWPs. Different initial UL BWPs are configured with independent UL-DL configurations and/or RO resources, and different first DL bandwidths are configured with independent UL-DL configurations and/or SSs | 501 |
|---|---|

**FIG. 5**

**FIG. 6**

**FIG. 7**

**FIG. 8**

**FIG. 9**

**FIG. 10**

DL slot      Flexible slot      UL slot

UL subband

RO

DL common
signal and/
or
information

**FIG. 11**

**FIG. 12**

EP 4 654 647 A1

**FIG. 13**

EP 4 654 647 A1

Communication apparatus

Receiving unit 1401

Sending unit 1402

**FIG. 14**

Communication apparatus

Receiving unit 1501

Sending unit 1502

**FIG. 15**

Communication apparatus

Sending unit 1601

Receiving unit 1602

**FIG. 16**

Communication apparatus

Sending unit 1701

**FIG. 17**

**FIG. 18**

**FIG. 19**

**FIG. 20**

## INTERNATIONAL SEARCH REPORT

| International application No. |
|---|
| **PCT/CN2023/072878** |

| A. | CLASSIFICATION OF SUBJECT MATTER |
|---|---|
| | H04W24/02(2009.01)i |

According to International Patent Classification (IPC) or to both national classification and IPC

| B. | FIELDS SEARCHED |
|---|---|

Minimum documentation searched (classification system followed by classification symbols)

IPC：H04W72/-; H04W24/-; H04L5/-; H04W74/-; H04W56/-; H04W48/-

Documentation searched other than minimum documentation to the extent that such documents are included in the fields searched

Electronic data base consulted during the international search (name of data base and, where practicable, search terms used)

CNABS, CNTXT, ENTXTC, WPABSC: 部分带宽, 初始, 带宽, 带宽部分, 单独, 独立, 分配, 格式, 公共, 公共搜索空间, 共享, 广播, 类型, 配置, 频带, 上下行, 上行, 时分双工, 随机接入, 下行, 序号, 寻呼, 子带, 0, bwp, BWP, CSS, DL, MSG, OSI, RACH, RO, SIB, SS, TDD, UL, "#", CSS#0, "CSS#0"; 3GPP, ENTXT, WPABS: 0, bwp, BWP, CSS, DL, downlink, initial, MSG, OSI, paging, RACH, RO, SIB, SS, subband, TDD, type, UL, uplink, "#", CSS#0, "CSS#0", config

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 106605438 A (HUAWEI TECHNOLOGIES CO., LTD.) 26 April 2017 (2017-04-26) description, paragraphs 173-233 | 1-4, 6-18, 21-39, 47-50, 52-63, 66-84, 89, 91, 93-98 |
| Y | CN 106605438 A (HUAWEI TECHNOLOGIES CO., LTD.) 26 April 2017 (2017-04-26) description, paragraphs 173-233 | 40-46, 85-88, 90, 92 |
| Y | CN 115622667 A (VIVO MOBILE COMMUNICATION CO., LTD.) 17 January 2023 (2023-01-17) description, paragraphs 140-150 | 40-46, 85-88, 90, 92 |
| A | CN 111699747 A (HUAWEI TECHNOLOGIES CO., LTD.) 22 September 2020 (2020-09-22) entire document | 1-98 |
| A | CN 109219128 A (BEIJING SAMSUNG TELECOM R&D CENTER; SAMSUNG ELECTRONICS CO., LTD.) 15 January 2019 (2019-01-15) entire document | 1-98 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 October 2023** | **11 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/072878**

### C. DOCUMENTS CONSIDERED TO BE RELEVANT

| Category* | Citation of document, with indication, where appropriate, of the relevant passages | Relevant to claim No. |
|---|---|---|
| A | CN 114071750 A (HUAWEI TECHNOLOGIES CO., LTD.) 18 February 2022 (2022-02-18) entire document | 1-98 |
| A | CN 114916040 A (HUAWEI TECHNOLOGIES CO., LTD.) 16 August 2022 (2022-08-16) entire document | 1-98 |
| A | US 2018092101 A1 (HUAWEI TECHNOLOGIES CO., LTD.) 29 March 2018 (2018-03-29) entire document | 1-98 |
| A | US 2022338272 A1 (NTT DOCOMO, INC.) 20 October 2022 (2022-10-20) entire document | 1-98 |
| A | US 2013077582 A1 (SAMSUNG ELECTRONICS CO., LTD.) 28 March 2013 (2013-03-28) entire document | 1-98 |

Form PCT/ISA/210 (second sheet) (July 2022)

**INTERNATIONAL SEARCH REPORT**
Information on patent family members

International application No.

**PCT/CN2023/072878**

| Patent document cited in search report | | | Publication date (day/month/year) | Patent family member(s) | | | Publication date (day/month/year) |
|---|---|---|---|---|---|---|---|
| CN | 106605438 | A | 26 April 2017 | US | 2018092101 | A1 | 29 March 2018 |
| | | | | US | 10440714 | B2 | 08 October 2019 |
| | | | | JP | 2018524867 | A | 30 August 2018 |
| | | | | JP | 6731002 | B2 | 29 July 2020 |
| | | | | WO | 2016192048 | A1 | 08 December 2016 |
| | | | | WO | 2016192048 | A8 | 19 January 2017 |
| | | | | KR | 20180014036 | A | 07 February 2018 |
| | | | | KR | 102039957 | B1 | 05 November 2019 |
| | | | | EP | 3294024 | A1 | 14 March 2018 |
| | | | | EP | 3294024 | A4 | 15 August 2018 |
| | | | | EP | 3294024 | B1 | 28 September 2022 |
| | | | | US | 2020008203 | A1 | 02 January 2020 |
| | | | | US | 10959231 | B2 | 23 March 2021 |
| CN | 115622667 | A | 17 January 2023 | None | | | |
| CN | 111699747 | A | 22 September 2020 | None | | | |
| CN | 109219128 | A | 15 January 2019 | None | | | |
| CN | 114071750 | A | 18 February 2022 | None | | | |
| CN | 114916040 | A | 16 August 2022 | None | | | |
| US | 2018092101 | A1 | 29 March 2018 | None | | | |
| US | 2022338272 | A1 | 20 October 2022 | JPWO | 2021064875 | A1 | 08 April 2021 |
| | | | | WO | 2021064875 | A1 | 08 April 2021 |
| | | | | EP | 4040884 | A1 | 10 August 2022 |
| | | | | EP | 4040884 | A4 | 03 May 2023 |
| US | 2013077582 | A1 | 28 March 2013 | US | 2017196019 | A1 | 06 July 2017 |
| | | | | US | 10314074 | B2 | 04 June 2019 |
| | | | | EP | 3462799 | A1 | 03 April 2019 |
| | | | | EP | 3462799 | B1 | 04 August 2021 |
| | | | | ES | 2895502 | T3 | 21 February 2022 |
| | | | | PL | 3462799 | T3 | 08 November 2021 |
| | | | | US | 2015245378 | A1 | 27 August 2015 |
| | | | | US | 9603166 | B2 | 21 March 2017 |
| | | | | WO | 2013043006 | A1 | 28 March 2013 |
| | | | | HUE | 056088 | T2 | 28 January 2022 |
| | | | | EP | 2759076 | A1 | 30 July 2014 |
| | | | | EP | 2759076 | A4 | 10 June 2015 |
| | | | | EP | 2759076 | B1 | 21 November 2018 |
| | | | | US | 2019289630 | A1 | 19 September 2019 |
| | | | | US | 10856325 | B2 | 01 December 2020 |
| | | | | EP | 3927084 | A1 | 22 December 2021 |
| | | | | KR | 20130032548 | A | 02 April 2013 |
| | | | | KR | 101962245 | B1 | 27 March 2019 |
| | | | | US | 2021112589 | A1 | 15 April 2021 |
| | | | | US | 11122615 | B2 | 14 September 2021 |
| | | | | US | 2020077435 | A1 | 05 March 2020 |
| | | | | US | 10917911 | B2 | 09 February 2021 |
| | | | | ES | 2702538 | T3 | 01 March 2019 |
| | | | | US | 9031019 | B2 | 12 May 2015 |

Form PCT/ISA/210 (patent family annex) (July 2022)